(19) Europäisches Patentamt
European Patent Office
Office européen des brevets

(11) EP 4 280 721 A1

(12) EUROPEAN PATENT APPLICATION
published in accordance with Art. 153(4) EPC

(43) Date of publication:
**22.11.2023 Bulletin 2023/47**

(21) Application number: **22739834.4**

(22) Date of filing: **18.01.2022**

(51) International Patent Classification (IPC):
***H04W 64/00*** *(2009.01)* ***H04W 24/10*** *(2009.01)*
***H04L 5/00*** *(2006.01)* ***G01S 1/04*** *(2006.01)*

(52) Cooperative Patent Classification (CPC):
**G01S 1/04; H04L 5/00; H04W 24/10; H04W 64/00**

(86) International application number:
**PCT/KR2022/000925**

(87) International publication number:
**WO 2022/154642 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.01.2021 US 202163138537 P**

(71) Applicant: **LG Electronics Inc.**
**Yeongdeungpo-gu**
**Seoul 07336 (KR)**

(72) Inventors:
- **CHA, Hyunsu**
  **Seoul 06772 (KR)**
- **LEE, Jeongsu**
  **Seoul 06772 (KR)**

(74) Representative: **Frenkel, Matthias Alexander**
**Wuesthoff & Wuesthoff**
**Patentanwälte PartG mbB**
**Schweigerstraße 2**
**81541 München (DE)**

(54) **METHOD FOR TRANSMITTING AND RECEIVING SIGNAL IN WIRELESS COMMUNICATION SYSTEM, AND DEVICE SUPPORTING SAME**

(57) Various embodiments relate to a next-generation wireless communication system for supporting a higher data transmission rate than that of a 4th generation (4G) system. According to various embodiments, a method for transmitting and receiving a signal in a wireless communication system and a device supporting same may be provided, and various other embodiments may also be provided.

FIG. 17

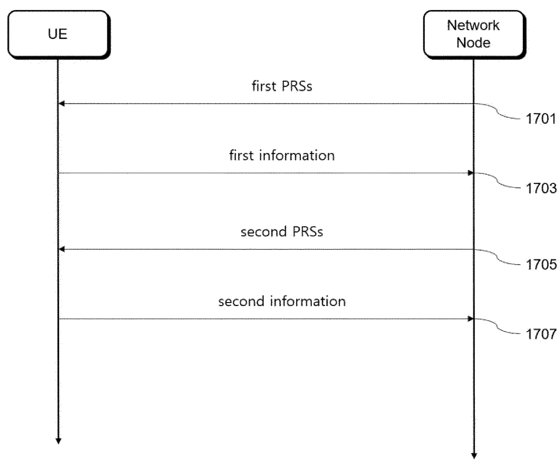


EP 4 280 721 A1

## Description

### TECHNICAL FIELD

Various embodiments are related to a wireless communication system.

### BACKGROUND

As a number of communication devices have required higher communication capacity, the necessity of the mobile broadband communication much improved than the existing radio access technology (RAT) has increased. In addition, massive machine type communications (MTC) capable of providing various services at anytime and anywhere by connecting a number of devices or things to each other has been considered in the next generation communication system. Moreover, a communication system design capable of supporting services/UEs sensitive to reliability and latency has been discussed.

### DISCLOSURE

### TECHNICAL PROBLEM

Various embodiments may provide a method and apparatus for transmitting and receiving a signal in a wireless communication system.

Various embodiments may provide a positioning method based on timing measurement and an apparatus supporting the same.

It will be appreciated by persons skilled in the art that the objects that could be achieved with the various embodiments are not limited to what has been particularly described hereinabove and the above and other objects that the various embodiments could achieve will be more clearly understood from the following detailed description.

### TECHNICAL SOLUTION

Various embodiments may provide a method of transmitting and receiving a signal in a wireless communication system and apparatus for supporting the same.

According to various embodiments, a method performed by a user equipment (UE) in a wireless communication system may be provided.

According to various embodiments, the method may include receiving a plurality of first positioning reference signal (PRS) based on a plurality of first transmission (Tx) beams, transmitting first information regarding at least one of one or more first measurements related to the plurality of first PRSs or one or more first PRS resource identifiers (IDs) related to the plurality of first PRSs, receiving a plurality of second PRSs based on a plurality of second Tx beams related to the first information, and transmitting second information regarding at least one of one or more second measurements related to the plurality of second PRSs or one or more second PRS resource IDs related to the plurality of second PRSs.

According to various embodiments, the one or more first measurements may be a maximum reference signal received power (RSRP) among reference signal received powers (RSRPs) acquired from the plurality of first PRSs, a minimum propagation time among propagation times of first arrival signal paths acquired from the plurality of first PRSs, or a maximum power among powers of the first arrival signal paths.

According to various embodiments, based on that the one or more first measurements are the maximum RSRP, the one or more first PRS resource IDs may be a PRS resource ID related to a PRS corresponding to the maximum RSRP among the plurality of first PRSs.

According to various embodiments, based on that the one or more first measurements are the minimum propagation time, the one or more first PRS resource IDs may be a PRS resource ID related to a PRS corresponding to the minimum propagation time among the plurality of first PRSs.

According to various embodiments, based on that the one or more first measurements are the maximum power, the one or more first PRS resource IDs may be a PRS resource ID related to a PRS corresponding to the maximum power among the plurality of first PRSs.

According to various embodiments, the UE may be configured to support a plurality of Rx beams.

According to various embodiments, the plurality of first PRSs may be received using one reception (Rx) beam among the plurality of Rx beams.

According to various embodiments, the plurality of second PRSs may be received using beam sweeping based on at least some Rx beams among the plurality of Rx beams.

According to various embodiments, the method may further include transmitting information regarding an ID of the one Rx beam.

According to various embodiments, a beam width of each of the plurality of first Tx beams may be greater than a beam width of each of the plurality of second Tx beams.

According to various embodiments, the plurality of second Tx beams may be configured based on an estimated location of the UE estimated from the first information.

According to various embodiments, each of the first information and the second information may be included in information related to downlink-angle of departure (DL-AoD) measurement reporting.

According to various embodiments, a user equipment (UE) operating in a wireless communication system may be provided.

According to various embodiments, the UE may include a transceiver, and one or more processors connected to the transceiver.

According to various embodiments, the one or more processors may be configured to receive a plurality of first positioning reference signals (PRSs) based on a plurality of first transmission (Tx) beams, transmit first information regarding at least one of one or more first measurements related to the plurality of first PRSs or one or more first PRS resource identifiers (IDs) related to the plurality of first PRSs, receive a plurality of second PRSs based on a plurality of second Tx beams related to the first information, and transmit second information regarding at least one of one or more second measurements related to the plurality of second PRSs or one or more second PRS resource IDs related to the plurality of second PRSs.

According to various embodiments, the one or more first measurements may be a maximum reference signal received power (RSRP) among reference signal received powers (RSRPs) acquired from the plurality of first PRSs, a minimum propagation time among propagation times of first arrival signal paths acquired from the plurality of first PRSs, or a maximum power among powers of the first arrival signal paths.

According to various embodiments, based on that the one or more first measurements are the maximum RSRP, the one or more first PRS resource IDs may be a PRS resource ID related to a PRS corresponding to the maximum RSRP among the plurality of first PRSs.

According to various embodiments, based on that the one or more first measurements are the minimum propagation time, the one or more first PRS resource IDs may be a PRS resource ID related to a PRS corresponding to the minimum propagation time among the plurality of first PRSs.

According to various embodiments, based on that the one or more first measurements are the maximum power, the one or more first PRS resource IDs may be a PRS resource ID related to a PRS corresponding to the maximum power among the plurality of first PRSs.

According to various embodiments, the one or more processors may be configured to support the plurality of Rx beams.

According to various embodiments, the plurality of first PRSs may be received using one reception (Rx) beam among the plurality of Rx beams.

According to various embodiments, the plurality of second PRSs may be received using beam sweeping based on at least some Rx beams among the plurality of Rx beams.

According to various embodiments, the one or more processors may be configured to transmit information regarding an ID of the one Rx beam.

According to various embodiments, the one or more processors may be configured to communicate with one or more of a mobile terminal, a network, and an autonomous vehicle other than a vehicle including the UE.

According to various embodiments, a method performed by a base station (BS) in a wireless communication system may be provided.

According to various embodiments, the method may include transmitting a plurality of first positioning reference signal (PRS) based on a plurality of first transmission (Tx) beams, receiving first information regarding at least one of one or more first measurements related to the plurality of first PRSs or one or more first PRS resource identifiers (IDs) related to the plurality of first PRSs, transmitting a plurality of second PRSs based on a plurality of second Tx beams related to the first information, and receiving second information regarding at least one of one or more second measurements related to the plurality of second PRSs or one or more second PRS resource IDs related to the plurality of second PRSs.

According to various embodiments, a base station (BS) operating in a wireless communication system may be provided.

According to various embodiments, the BS may include a transceiver, and one or more processors connected to the transceiver.

According to various embodiments, the one or more processors may be configured to transmit a plurality of first positioning reference signal (PRS) based on a plurality of first transmission (Tx) beams, receive first information regarding at least one of one or more first measurements related to the plurality of first PRSs or one or more first PRS resource identifiers (IDs) related to the plurality of first PRSs, transmit a plurality of second PRSs based on a plurality of

of second Tx beams related to the first information, and receive second information regarding at least one of one or more second measurements related to the plurality of second PRSs or one or more second PRS resource IDs related to the plurality of second PRSs.

According to various embodiments, a device operating in a wireless communication system may be provided.

According to various embodiments, the device may include one or more processors, and one or more memories operatively connected to the one or more processors and configured to store one or more instructions that cause the one or more processors to perform an operation based on the operation being executed.

According to various embodiments, the operation may include receiving a plurality of first positioning reference signal (PRS) based on a plurality of first transmission (Tx) beams, transmitting first information regarding at least one of one or more first measurements related to the plurality of first PRSs or one or more first PRS resource identifiers (IDs) related to the plurality of first PRSs, receiving a plurality of second PRSs based on a plurality of second Tx beams related to the first information, and transmitting second information regarding at least one of one or more second measurements related to the plurality of second PRSs or one or more second PRS resource IDs related to the plurality of second PRSs.

According to various embodiments, a non-transitory processor-readable medium storing one or more instructions that cause one or more processors to perform an operation may be provided.

According to various embodiments, the operation may include receiving a plurality of first positioning reference signal (PRS) based on a plurality of first transmission (Tx) beams, transmitting first information regarding at least one of one or more first measurements related to the plurality of first PRSs or one or more first PRS resource identifiers (IDs) related to the plurality of first PRSs, receiving a plurality of second PRSs based on a plurality of second Tx beams related to the first information, and transmitting second information regarding at least one of one or more second measurements related to the plurality of second PRSs or one or more second PRS resource IDs related to the plurality of second PRSs.

It will be understood by those skilled in the art that the above-described embodiments are merely part of various embodiments of the present disclosure, and various modifications and alternatives could be developed from the following technical features of the present disclosure.

## ADVANTAGEOUS EFFECTS

According to various embodiments, a signal may be effectively transmitted and received in a wireless communication system.

According to various embodiments, positioning may be effectively performed in a wireless communication system.

According to various embodiments, the location measurement accuracy of a user equipment (UE) is improved.

It will be appreciated by persons skilled in the art that the effects to be achieved with the various embodiments are not limited to what has been particularly described hereinabove and other advantages of the various embodiments will be more clearly understood from the following detailed description taken in conjunction with the accompanying drawings.

## BRIEF DESCRIPTION OF THE DRAWINGS

The accompanying drawings are provided to help understanding of various embodiments, along with a detailed description. However, the technical features of various embodiments are not limited to a specific drawing, and features disclosed in each drawing may be combined with each other to constitute a new embodiment. Reference numerals in each drawing denote structural elements.

FIG. 1 is a diagram illustrating physical channels and a signal transmission method using the physical channels, which may be used in various embodiments.

FIG. 2 is a diagram illustrating a radio frame structure in a new radio access technology (NR) system to which various embodiments are applicable.

FIG. 3 illustrates an exemplary resource grid to which various embodiments are applicable.

FIG. 4 is a diagram illustrating mapping of physical channels in a slot, to which various embodiments are applicable.

FIG. 5 is a diagram illustrating a positioning protocol configuration for positioning a user equipment (UE), to which various embodiments are applicable.

FIG. 6 illustrates an exemplary system architecture for measuring positioning of a UE to which various embodiments are applicable.

FIG. 7 illustrates an implementation example of a network for UE positioning.

FIG. 8 is a diagram illustrating protocol layers for supporting LTE positioning protocol (LPP) message transmission, to which various embodiments are applicable.

FIG. 9 is a diagram illustrating protocol layers for supporting NR positioning protocol a (NRPPa) protocol data unit (PDU) transmission, to which various embodiments are applicable.

FIG. 10 is a diagram illustrating an observed time difference of arrival (OTDOA) positioning method, to which various embodiments are applicable.

FIG. 11 is a diagram illustrating a multi-round trip time (multi-RTT) positioning method to which various embodiments are applicable.

FIG. 12 is a simplified diagram illustrating a method of operating a UE, a transmission and reception point (TRP), a location server, and/or a location management function (LMF) according to various embodiments.

FIG. 13 is a simplified diagram illustrating a method of operating a UE, a TRP, a location server, and/or an LMF according to various embodiments.

FIG. 14 is a simplified diagram illustrating an operating method of a UE, a TRP, a location server, and/or an LMF according to various embodiments.

FIG. 15 is a diagram illustrating an example of 2-step PRS transmission and reception according to various embodiments.

FIG. 16 is a diagram for explaining a linear combination factor of a plurality of beams according to various embodiments.

FIG. 17 is a diagram schematically illustrating a method of operating a UE and a network node according to various embodiments.

FIG. 18 is a flowchart illustrating a method of operating a UE according to various embodiments.

FIG. 19 is a flowchart illustrating a method of operating a network node according to various embodiments.

FIG. 20 is a diagram illustrating a device for implementing various embodiments.

FIG. 21 illustrates an exemplary communication system to which various embodiments are applied.

FIG. 22 illustrates exemplary wireless devices to which various embodiments are applicable.

FIG. 23 illustrates other exemplary wireless devices to which various embodiments are applied.

FIG. 24 illustrates an exemplary portable device to which various embodiments are applied.

FIG. 25 illustrates an exemplary vehicle or autonomous vehicle to which various embodiments are applied.

## DETAILED DESCRIPTION

Various embodiments are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA may be implemented as a radio technology such as Universal Terrestrial Radio Access (UTRA) or CDMA2000. TDMA may be implemented as a radio technology such as Global System for Mobile communications (GSM)/General Packet Radio Service (GPRS)/Enhanced Data Rates for GSM Evolution (EDGE). OFDMA may be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

Various embodiments are described in the context of a 3GPP communication system (e.g., including LTE, NR, 6G, and next-generation wireless communication systems) for clarity of description, to which the technical spirit of the various embodiments is not limited. For the background art, terms, and abbreviations used in the description of the various embodiments, refer to the technical specifications published before the present disclosure. For example, the documents of 3GPP TS 36.211, 3GPP TS 36.212, 3GPP TS 36.213, 3GPP TS 36.300, 3GPP TS 36.321, 3GPP TS 36.331, 3GPP TS 36.355, 3GPP TS 36.455, 3GPP TS 37.355, 3GPP TS 37.455, 3GPP TS 38.211, 3GPP TS 38.212, 3GPP TS 38.213, 3GPP TS 38.214, 3GPP TS 38.215, 3GPP TS 38.300, 3GPP TS 38.321, 3GPP TS 38.331, 3GPP TS 38.355, 3GPP TS 38.455, and so on may be referred to.

### 1. 3GPP System

#### 1.1. Physical Channels and Signal Transmission and Reception

In a wireless access system, a UE receives information from a base station on a downlink (DL) and transmits information to the base station on an uplink (UL). The information transmitted and received between the UE and the base station includes general data information and various types of control information. There are many physical channels according to the types/usages of information transmitted and received between the base station and the UE.

FIG. 1 is a diagram illustrating physical channels and a signal transmission method using the physical channels, which may be used in various embodiments.

When powered on or when a UE initially enters a cell, the UE performs initial cell search involving synchronization with a BS in step S11. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S12.

Subsequently, to complete connection to the eNB, the UE may perform a random access procedure with the eNB (S13 to S16). In the random access procedure, the UE may transmit a preamble on a physical random access channel (PRACH) (S13) and may receive a PDCCH and a random access response (RAR) for the preamble on a PDSCH associated with the PDCCH (S14). The UE may transmit a physical uplink shared channel (PUSCH) by using scheduling information in the RAR (S15), and perform a contention resolution procedure including reception of a PDCCH signal and a PDSCH signal corresponding to the PDCCH signal (S16).

Aside from the above 4-step random access procedure (4-step RACH procedure or type-1 random access procedure), when the random access procedure is performed in two steps (2-step RACH procedure or type-2 random access procedure), steps S13 and S 15 may be performed as one UE transmission operation (e.g., an operation of transmitting message A (MsgA) including a PRACH preamble and/or a PUSCH), and steps S14 and S16 may be performed as one BS transmission operation (e.g., an operation of transmitting message B (MsgB) including an RAR and/or contention resolution information)

After the above procedure, the UE may receive a PDCCH and/or a PDSCH from the BS (S17) and transmit a PUSCH and/or a physical uplink control channel (PUCCH) to the BS (S18), in a general UL/DL signal transmission procedure.

Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc.

In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

### 1.2. PHYSICAL RESOURCES

FIG. 2 illustrates an NR system based radio frame structure which may be used for various embodiments.

The NR system may support multiple numerologies. A numerology may be defined by a subcarrier spacing (SCS) and a cyclic prefix (CP) overhead. Multiple SCSs may be derived by scaling a default SCS by an integer N (or $\mu$). Further, even though it is assumed that a very small SCS is not used in a very high carrier frequency, a numerology to be used may be selected independently of the frequency band of a cell. Further, the NR system may support various frame structures according to multiple numerologies.

Now, a description will be given of OFDM numerologies and frame structures which may be considered for the NR system. Multiple OFDM numerologies supported by the NR system may be defined as listed in Table 1. For a bandwidth part, $\mu$ and a CP are obtained from RRC parameters provided by the BS.

[Table 1]

| $\mu$ | $\Delta f = 2^{\mu} \cdot 15\,[\text{kHz}]$ | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

In NR, multiple numerologies (e.g., SCSs) are supported to support a variety of 5G services. For example, a wide area in cellular bands is supported for an SCS of 15kHz, a dense-urban area, a lower latency, and a wider carrier bandwidth are supported for an SCS of 30kHz/60kHz, and a larger bandwidth than 24.25GHz is supported for an SCS of 60kHz or more, to overcome phase noise.

An NR frequency band is defined by two types of frequency ranges, FR1 and FR2. FR1 may be a sub-6GHz range, and FR2 may be an above-6GHz range, that is, a millimeter wave (mmWave) band.

Table 2 below defines the NR frequency band, by way of example.

[Table 2]

| Frequency range designation | Corresponding frequency range | Subcarrier Spacing |
|---|---|---|
| FR1 | 410 MHz-7125 MHz | 15, 30, 60kHz |
| FR2 | 24250 MHz - 52600 MHz | 60, 120, 240kHz |

Regarding a frame structure in the NR system, the time-domain sizes of various fields are represented as multiples of a basic time unit for NR, $T_c = 1/(\triangle f_{max} * N_f)$ where $\triangle f_{max} = 480 * 10^3$ Hz and a value $N_f$ related to a fast Fourier transform (FFT) size or an inverse fast Fourier transform (IFFT) size is given as Nf = 4096. $T_c$ and $T_s$ which is an LTE-based time unit and sampling time, given as $T$ , = 1/((15kHz)*2048) are placed in the following relationship: $T_s / T_c = 64$. DL and UL transmissions are organized into (radio) frames each having a duration of $T_f = (\triangle f_{max} * N_f/100) * T_c = 10$ms. Each radio frame includes 10 subframes each having a duration of $T_{sf} = (\triangle f_{max} * N_f/1000) * T_c = 1$ms. There may exist one set of frames for UL and one set of frames for DL. For a numerology μ, slots are numbered with $n^{\mu}_s$ , ∈ {0,..., $N^{slot,\mu}_{subframe}$-1} in an increasing order in a subframe, and with $n^{\mu}_{s,f}$ ∈ {0,. .., $N^{slot,\mu}_{frame}$-1} in an increasing order in a radio frame. One slot includes $N^{\mu}_{symb}$ consecutive OFDM symbols, and $N^{\mu}_{symb}$ depends on a CP. The start of a slot nμs in a subframe is aligned in time with the start of an OFDM symbol $n^{\mu}_s * N^{\mu}_{symb}$ in the same subframe.

Table 3 lists the number of symbols per slot, the number of slots per frame, and the number of slots per subframe, for each SCS in a normal CP case, and Table 4 lists the number of symbols per slot, the number of slots per frame, and the number of slots per subframe, for each SCS in an extended CP case.

[Table 3]

| μ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N^{slot}_{symb}$ | $N^{frame,\mu}_{slot}$ | $N^{subframe,\mu}_{slot}$ |
|---|---|---|---|
| 2 | 12 | 40 | 4 |

In the above tables, $N^{slot}_{symb}$ represents the number of symbols in a slot, $N^{frame,\mu}_{slot}$ represents the number of slots in a frame, and $N^{subframe,\mu}_{slot}$ represents the number of slots in a subframe.

In the NR system to which various embodiments are applicable, different OFDM(A) numerologies (e.g., SCSs, CP lengths, and so on) may be configured for a plurality of cells which are aggregated for one UE. Accordingly, the (absolute time) period of a time resource including the same number of symbols (e.g., a subframe (SF), a slot, or a TTI) (generically referred to as a time unit (TU), for convenience) may be configured differently for the aggregated cells.

FIG. 2 illustrates an example with μ=2 (i.e., an SCS of 60kHz), in which referring to Table 6, one subframe may include four slots. One subframe = {1, 2, 4} slots in FIG. 2, which is exemplary, and the number of slot(s) which may be included in one subframe is defined as listed in Table 6 or Table 7.

Further, a mini-slot may include 2, 4 or 7 symbols, fewer symbols than 2, or more symbols than 7.

Regarding physical resources in the NR system, antenna ports, a resource grid, resource elements (REs), resource blocks (RBs), carrier parts, and so one may be considered. The physical resources in the NR system will be described below in detail.

An antenna port is defined such that a channel conveying a symbol on an antenna port may be inferred from a channel conveying another symbol on the same antenna port. When the large-scale properties of a channel carrying a symbol on one antenna port may be inferred from a channel carrying a symbol on another antenna port, the two antenna ports may be said to be in a quasi co-located or quasi co-location (QCL) relationship. The large-scale properties include one or more of delay spread, Doppler spread, frequency shift, average received power, received timing, average delay, and a spatial reception (Rx) parameter. The spatial Rx parameter refers to a spatial (Rx) channel property parameter such as an angle of arrival.

FIG. 3 illustrates an exemplary resource grid to which various embodiments are applicable.

Referring to FIG. 3, for each subcarrier spacing (SCS) and carrier, a resource grid is defined as 14 $\times$ $2^{\mu}$ OFDM symbols by $N_{\mathrm{grid}}^{\mathrm{size},\mu} \times N_{\mathrm{SC}}^{\mathrm{RB}}$ subcarriers, where $N_{\mathrm{grid}}^{\mathrm{size},\mu}$ is indicated by RRC signaling from the BS. $N_{\mathrm{grid}}^{\mathrm{size},\mu}$ may vary according to an SCS configuration $\mu$ and a transmission direction, UL or DL. There is one resource grid for an SCS configuration $\mu$, an antenna port p, and a transmission direction (UL or DL). Each element of the resource grid for the SCS configuration $\mu$ and the antenna port p is referred to as an RE and uniquely identified by an index pair (k, l) where k represents an index in the frequency domain, and l represents a symbol position in the frequency domain relative to a reference point. The RE (k, l) for the SCS configuration $\mu$ and the antenna port p corresponds to a physical resource and a complex value $a_{\mathrm{k,l}}^{(\mathrm{p},\mu)}$. An RB is defined as $N_{\mathrm{SC}}^{\mathrm{RB}} = 12$ consecutive subcarriers in the frequency domain.

Considering that the UE may not be capable of supporting a wide bandwidth supported in the NR system, the UE may be configured to operate in a part (bandwidth part (BWP)) of the frequency bandwidth of a cell.

FIG. 4 is a diagram illustrating exemplary mapping of physical channels in a slot, to which various embodiments are applicable.

One slot may include all of a DL control channel, DL or UL data, and a UL control channel. For example, the first N symbols of a slot may be used to transmit a DL control channel (hereinafter, referred to as a DL control region), and the last M symbols of the slot may be used to transmit a UL control channel (hereinafter, referred to as a UL control region). Each of N and M is an integer equal to or larger than 0. A resource area (hereinafter, referred to as a data region) between the DL control region and the UL control region may be used to transmit DL data or UL data. There may be a time gap for DL-to-UL or UL-to-DL switching between a control region and a data region. A PDCCH may be transmitted in the DL control region, and a PDSCH may be transmitted in the DL data region. Some symbols at a DL-to-UL switching time in the slot may be used as the time gap.

The BS transmits related signals to the UE on DL channels as described below, and the UE receives the related signals from the BS on the DL channels.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping are performed on a codeword basis, and modulation symbols generated from each codeword are mapped to one or more layers (layer mapping). Each layer together with a demodulation reference signal (DMRS) is mapped to resources, generated as an OFDM symbol signal, and transmitted through a corresponding antenna port.

The PDCCH may deliver downlink control information (DCI), for example, DL data scheduling information, UL data scheduling information, and so on. The PUCCH may deliver uplink control information (UCI), for example, an acknowledgement/negative acknowledgement (ACK/NACK) information for DL data, channel state information (CSI), a scheduling request (SR), and so on.

The PDCCH carries downlink control information (DCI) and is modulated in quadrature phase shift keying (QPSK). One PDCCH includes 1, 2, 4, 8, or 16 control channel elements (CCEs) according to an aggregation level (AL). One CCE includes 6 resource element groups (REGs). One REG is defined by one OFDM symbol by one (P)RB.

The PDCCH is transmitted in a control resource set (CORESET). A CORESET is defined as a set of REGs having a given numerology (e.g., SCS, CP length, and so on). A plurality of CORESETs for one UE may overlap with each other in the time/frequency domain. A CORESET may be configured by system information (e.g., a master information block (MIB)) or by UE-specific higher layer (RRC) signaling. Specifically, the number of RBs and the number of symbols (up to 3 symbols) included in a CORESET may be configured by higher-layer signaling.

The UE acquires DCI delivered on a PDCCH by decoding (so-called blind decoding) a set of PDCCH candidates. A set of PDCCH candidates decoded by a UE are defined as a PDCCH search space set. A search space set may be a common search space (CSS) or a UE-specific search space (USS). The UE may acquire DCI by monitoring PDCCH candidates in one or more search space sets configured by an MIB or higher-layer signaling.

The UE transmits related signals on later-described UL channels to the BS, and the BS receives the related signals on the UL channels from the UE.

The PUSCH delivers UL data (e.g., a UL-shared channel transport block (UL-SCH TB)) and/or UCI, in cyclic prefix-orthogonal frequency division multiplexing (CP-OFDM) waveforms or discrete Fourier transform-spread-orthogonal division multiplexing (DFT-s-OFDM) waveforms. If the PUSCH is transmitted in DFT-s-OFDM waveforms, the UE transmits the PUSCH by applying transform precoding. For example, if transform precoding is impossible (e.g., transform precoding is disabled), the UE may transmit the PUSCH in CP-OFDM waveforms, and if transform precoding is possible (e.g., transform precoding is enabled), the UE may transmit the PUSCH in CP-OFDM waveforms or DFT-s-OFDM waveforms. The PUSCH transmission may be scheduled dynamically by a UL grant in DCI or semi-statically by higher-layer signaling (e.g., RRC signaling) (and/or layer 1 (L1) signaling (e.g., a PDCCH)) (a configured grant). The PUSCH transmission may be performed in a codebook-based or non-codebook-based manner.

The PUCCH delivers UCI, an HARQ-ACK, and/or an SR and is classified as a short PUCCH or a long PUCCH according to the transmission duration of the PUCCH.

1.4. QCL (Quasi co-located or Quasi co-location)

The UE may receive a list of up to M TCI-State configurations to decode a PDSCH according to a detected PDCCH carrying DCI intended for the UE and a given cell. M depends on a UE capability.

Each TCI-State includes a parameter for establishing a QCL relationship between one or two DL RSs and a PDSCH DMRS port. The QCL relationship is established with an RRC parameter qcl-Type1 for a first DL RS and an RRC parameter qcl-Type2 for a second DL RS (if configured).

The QCL type of each DL RS is given by a parameter 'qcl-Type' included in QCL-Info, and may have one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is for a specific NZP CSI-RS, corresponding NZP CSI-RS antenna ports may be indicated/configured as QCLed with a specific TRS from the perspective of QCL-Type A and with a specific SSB from the perspective of QCL-Type D. Upon receipt of this indication/configuration, the UE may receive the NZP CSI-RS using a Doppler value and a delay value which are measured in a QCL-TypeA TRS, and apply an Rx beam used to receive a QCL-Type D SSB for reception of the NZP CSI-RS.

## 2. Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

### 2.1. Positioning Protocol configuration

FIG. 5 is a diagram illustrating an exemplary positioning protocol configuration for positioning a UE, to which various embodiments are applicable.

Referring to FIG. 5, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.

- OTDOA Information Transfer. This function allows the reference source to exchange information with the LMF for the purpose of OTDOA positioning.
- Reporting of General Error Situations. This function allows reporting of general error situations, for which function-specific error messages have not been defined.

### 2.2. PRS (positioning reference signal)

For such positioning, a positioning reference signal (PRS) may be used. The PRS is a reference signal used to estimate the position of the UE.

A positioning frequency layer may include one or more PRS resource sets, each including one or more PRS resources.

Sequence generation

A PRS sequence *r*(*m*) (*m* = 0, 1, ...) may be defined by Equation 1.

[Equation 1]

$$r(m) = \frac{1}{\sqrt{2}}\big(1 - 2c(m)\big) + j\frac{1}{\sqrt{2}}\big(1 - 2c(m+1)\big)$$

c(i) may be a pseudo-random sequence. A pseudo-random sequence generator may be initialized by Equation 2.

[Equation 2]

$$c_{\text{init}} = \left(2^{22}\left\lfloor\frac{n_{\text{ID,seq}}^{\text{PRS}}}{1024}\right\rfloor + 2^{10}\left(N_{\text{symb}}^{\text{slot}} n_{\text{s,f}}^{\mu} + l + 1\right)\left(2\left(n_{\text{ID,seq}}^{\text{PRS}} \bmod 1024\right) + 1\right) + \left(n_{\text{ID,seq}}^{\text{PRS}} \bmod 1024\right)\right) \bmod 2^{31}$$

$n_{\text{s,f}}^{\mu}$ may be a slot number in a frame in an SCS configuration $\mu$. A DL PRS sequence ID $n_{\text{ID,seq}}^{\text{PRS}} \in \{0,1,\ldots,4095\}$ may be given by a higher-layer parameter (e.g., DL-PRS-SequenceId). 1 may be an OFDM symbol in a slot to which the sequence is mapped.

Mapping to physical resources in a DL PRS resource

A PRS sequence *r*(*m*) may be scaled by $\beta_{\text{PRS}}$ and mapped to REs $(k,l)_{p,\mu}$, specifically by Equation 3. $(k,l)_{p,\mu}$ may represent an RE (k, 1) for an antenna port p and the SCS configuration $\mu$.

[Equation 3]

$$a_{k,l}^{(p,\mu)} = \beta_{\mathrm{PRS}}\, r(m)$$

$$m = 0, 1, \ldots$$

$$k = mK_{\mathrm{comb}}^{\mathrm{PRS}} + \left(\left(k_{\mathrm{offset}}^{\mathrm{PRS}} + k'\right) \bmod K_{\mathrm{comb}}^{\mathrm{PRS}}\right)$$

$$l = l_{\mathrm{start}}^{\mathrm{PRS}}, l_{\mathrm{start}}^{\mathrm{PRS}} + 1, \ldots, l_{\mathrm{start}}^{\mathrm{PRS}} + L_{\mathrm{PRS}} - 1$$

Herein, the following conditions may have to be satisfied:

- The REs $(k,l)_{p,\mu}$ are included in an RB occupied by a DL PRS resource configured for the UE;
- The symbol l not used by any SS/PBCH block used by a serving cell for a DL PRS transmitted from the serving cell or indicated by a higher-layer parameter SSB-positionInBurst for a DL PRS transmitted from a non-serving cell;
- A slot number satisfies the following PRS resource set-related condition;

$l_{\mathrm{start}}^{\mathrm{PRS}}$ is the first symbol of the DL PRS in the slot, which may be given by a higher-layer parameter DL-PRS-ResourceSymbolOffset. The time-domain size of the DL PRS resource, $L_{\mathrm{PRS}} \in \{2,4,6,12\}$ may be given by a higher-layer parameter DL-PRS-NumSymbols. A comb size $K_{\mathrm{comb}}^{\mathrm{PRS}} \in \{2, 4, 6, 12\}$ may be given by a higher-layer parameter transmissionComb. A combination $\{L_{\mathrm{PRS}}, K_{\mathrm{comb}}^{\mathrm{PRS}}\}$ of $L_{\mathrm{PRS}}$ and $K_{\mathrm{comb}}^{\mathrm{PRS}}$ may be one of {2, 2}, {4, 2}, {6, 2}, {12, 2}, {4, 4}, {12, 4}, {6, 6}, {12, 6} and/or {12, 12}. An RE offset $k_{\mathrm{offset}}^{\mathrm{PRS}} \in \{0,1,\ldots,K_{\mathrm{comb}}^{\mathrm{PRS}} - 1\}$ may be given by comb Offset. A frequency offset *k'* may be a function of $l - l_{\mathrm{start}}^{\mathrm{PRS}}$ as shown in Table 8.

[Table 8]

| $K_{\mathrm{comb}}^{\mathrm{PRS}}$ | **Symbol number within the downlink PRS resource $l - l_{\mathrm{start}}^{\mathrm{PRS}}$** | | | | | | | | | | | |
|---|---|---|---|---|---|---|---|---|---|---|---|---|
| | **0** | **1** | **2** | **3** | **4** | **5** | **6** | **7** | **8** | **9** | **10** | **11** |
| 2 | 0 | 1 | 0 | 1 | 0 | 1 | 0 | 1 | 0 | 1 | 0 | 1 |
| 4 | 0 | 2 | 1 | 3 | 0 | 2 | 1 | 3 | 0 | 2 | 1 | 3 |
| 6 | 0 | 3 | 1 | 4 | 2 | 5 | 0 | 3 | 1 | 4 | 2 | 5 |
| 12 | 0 | 6 | 3 | 9 | 1 | 7 | 4 | 10 | 2 | 8 | 5 | 11 |

A reference point for k=0 may be the position of point A in a positioning frequency layer in which the DL PRS resource is configured. Point A may be given by a higher-layer parameter dl-PRS-PointA-r 16.

Mapping to slots in a DL PRS resource set

A DL PRS resource included in a DL PRS resource set may be transmitted in a slot and a frame which satisfy the following Equation 4.

[Equation 4]

$$\left(N_{\mathrm{slot}}^{\mathrm{frame},\mu} n_{\mathrm{f}}+n_{\mathrm{s,f}}^{\mu}-T_{\mathrm{offset}}^{\mathrm{PRS}}-T_{\mathrm{offset,res}}^{\mathrm{PRS}}\right) \bmod 2^{\mu} T_{\mathrm{per}}^{\mathrm{PRS}} \in \left\{i T_{\mathrm{gap}}^{\mathrm{PRS}}\right\}_{i=0}^{T_{\mathrm{rep}}^{\mathrm{PRS}}-1}$$

$N_{\mathrm{slot}}^{\mathrm{frame},\mu}$ may be the number of slots per frame in the SCS configuration μ. $n_f$ may be a system frame number (SFN). $n_{\mathrm{s,f}}^{\mu}$ may be a slot number in a frame in the SCS configuration μ. A slot offset $T_{\mathrm{offset}}^{\mathrm{PRS}} \in \left\{0,1,\ldots,T_{\mathrm{per}}^{\mathrm{PRS}}-1\right\}$ may be given by a higher-layer parameter *DL-PRS-ResourceSetSlotOffset.* A DL PRS resource slot offset $T_{\mathrm{offset,res}}^{\mathrm{PRS}}$ may be given by a higher layer parameter *DL-PRS-ResourceSlotOffset.* A periodicity $T_{\mathrm{per}}^{\mathrm{PRS}} \in \{4,5,8,10,16,20,32,40,64,80,160,320,640,1280,2560,5120,10240\}$ may be given by a higher-layer parameter *DL-PRS-Periodicity.* A repetition factor $T_{\mathrm{rep}}^{\mathrm{PRS}} \in \{1,2,4,6,8,16,32\}$ may be given by a higher-layer parameter DL-PRS-ResourceRepetitionFactor. A muting repetition factor $T_{\mathrm{muting}}^{\mathrm{PRS}}$ may be given by a higher-layer parameter *DL-PRS MutingBitRepetitionFactor.* A time gap $T_{\mathrm{gap}}^{\mathrm{PRS}} \in \{1,2,4,8,16,32\}$ may be given by a higher-layer parameter *DL-PRS-Resource Time Gap* .

**2.3. UE Positioning Architecture**

FIG. 6 illustrates an exemplary system architecture for measuring positioning of a UE to which various embodiments are applicable.

Referring to FIG. 6, an AMF may receive a request for a location service associated with a particular target UE from another entity such as a gateway mobile location center (GMLC) or the AMF itself decides to initiate the location service on behalf of the particular target UE. Then, the AMF transmits a request for a location service to a location management function (LMF). Upon receiving the request for the location service, the LMF may process the request for the location service and then returns the processing result including the estimated position of the UE to the AMF. In the case of a location service requested by an entity such as the GMLC other than the AMF, the AMF may transmit the processing result received from the LMF to this entity.

A new generation evolved-NB (ng-eNB) and a gNB are network elements of the NG-RAN capable of providing a measurement result for positioning. The ng-eNB and the gNB may measure radio signals for a target UE and transmits a measurement result value to the LMF. The ng-eNB may control several TPs, such as remote radio heads, or PRS-only TPs for support of a PRS-based beacon system for E-UTRA.

The LMF is connected to an enhanced serving mobile location center (E-SMLC) which may enable the LMF to access the E-UTRAN. For example, the E-SMLC may enable the LMF to support OTDOA, which is one of positioning methods of the E-UTRAN, using DL measurement obtained by a target UE through signals transmitted by eNBs and/or PRS-only TPs in the E-UTRAN.

The LMF may be connected to an SUPL location platform (SLP). The LMF may support and manage different location services for target UEs. The LMF may interact with a serving ng-eNB or a serving gNB for a target UE in order to obtain position measurement for the UE. For positioning of the target UE, the LMF may determine positioning methods, based on a location service (LCS) client type, required quality of service (QoS), UE positioning capabilities, gNB positioning capabilities, and ng-eNB positioning capabilities, and then apply these positioning methods to the serving gNB and/or serving ng-eNB. The LMF may determine additional information such as accuracy of the location estimate and velocity of the target UE. The SLP is a secure user plane location (SUPL) entity responsible for positioning over a user plane.

The UE may measure the position thereof using DL RSs transmitted by the NG-RAN and the E-UTRAN. The DL RSs transmitted by the NG-RAN and the E-UTRAN to the UE may include a SS/PBCH block, a CSI-RS, and/or a PRS. Which DL RS is used to measure the position of the UE may conform to configuration of LMF/E-SMLC/ng-eNB/E-UTRAN etc. The position of the UE may be measured by an RAT-independent scheme using different global navigation satellite systems (GNSSs), terrestrial beacon systems (TBSs), WLAN access points, Bluetooth beacons, and sensors (e.g., barometric sensors) installed in the UE. The UE may also contain LCS applications or access an LCS application through communication with a network accessed thereby or through another application contained therein. The LCS application may include measurement and calculation functions needed to determine the position of the UE. For example, the UE may contain an independent positioning function such as a global positioning system (GPS) and report the position thereof, independent of NG-RAN transmission. Such independently obtained positioning information may be used as assistance information of positioning information obtained from the network.

**2.4. Operation for UE Positioning**

FIG. 7 illustrates an implementation example of a network for UE positioning.

When an AMF receives a request for a location service in the case in which the UE is in connection management (CM)-IDLE state, the AMF may make a request for a network triggered service in order to establish a signaling connection with the UE and to assign a specific serving gNB or ng-eNB. This operation procedure is omitted in FIG. 7. In other words, in FIG. 7, it may be assumed that the UE is in a connected mode. However, the signaling connection may be released by an NG-RAN as a result of signaling and data inactivity while a positioning procedure is still ongoing.

An operation procedure of the network for UE positioning will now be described in detail with reference to FIG. 7. In step 1a, a 5GC entity such as GMLC may transmit a request for a location service for measuring the position of a target UE to a serving AMF. Here, even when the GMLC does not make the request for the location service, the serving AMF may determine the need for the location service for measuring the position of the target UE according to step 1b. For example, the serving AMF may determine that itself will perform the location service in order to measure the position of the UE for an emergency call.

In step 2, the AMF transfers the request for the location service to an LMF. In step 3a, the LMF may initiate location procedures with a serving ng-eNB or a serving gNB to obtain location measurement data or location measurement assistance data. For example, the LMF may transmit a request for location related information associated with one or more UEs to the NG-RAN and indicate the type of necessary location information and associated QoS. Then, the NG-RAN may transfer the location related information to the LMF in response to the request. In this case, when a location determination method according to the request is an enhanced cell ID (E-CID) scheme, the NG-RAN may transfer additional location related information to the LMF in one or more NR positioning protocol A (NRPPa) messages. Here, the "location related information" may mean all values used for location calculation such as actual location estimate information and radio measurement or location measurement. Protocol used in step 3a may be an NRPPa protocol which will be described later.

Additionally, in step 3b, the LMF may initiate a location procedure for DL positioning together with the UE. For example, the LMF may transmit the location assistance data to the UE or obtain a location estimate or location measurement value. For example, in step 3b, a capability information transfer procedure may be performed. Specifically, the LMF may transmit a request for capability information to the UE and the UE may transmit the capability information to the LMF. Here, the capability information may include information about a positioning method supportable by the LFM or the UE, information about various aspects of a particular positioning method, such as various types of assistance data for an A-GNSS, and information about common features not specific to any one positioning method, such as ability to handle multiple LPP transactions. In some cases, the UE may provide the capability information to the LMF although the LMF does not transmit a request for the capability information.

As another example, in step 3b, a location assistance data transfer procedure may be performed. Specifically, the UE may transmit a request for the location assistance data to the LMF and indicate particular location assistance data needed to the LMF. Then, the LMF may transfer corresponding location assistance data to the UE and transfer additional assistance data to the UE in one or more additional LTE positioning protocol (LPP) messages. The location assistance data delivered from the LMF to the UE may be transmitted in a unicast manner. In some cases, the LMF may transfer the location assistance data and/or the additional assistance data to the UE without receiving a request for the assistance data from the UE.

As another example, in step 3b, a location information transfer procedure may be performed. Specifically, the LMF may send a request for the location (related) information associated with the UE to the UE and indicate the type of necessary location information and associated QoS. In response to the request, the UE may transfer the location related information to the LMF. Additionally, the UE may transfer additional location related information to the LMF in one or more LPP messages. Here, the "location related information" may mean all values used for location calculation such as actual location estimate information and radio measurement or location measurement. Typically, the location related information may be a reference signal time difference (RSTD) value measured by the UE based on DL RSs transmitted to the UE by a plurality of NG-RANs and/or E-UTRANs. Similarly to the above description, the UE may transfer the location related information to the LMF without receiving a request from the LMF.

The procedures implemented in step 3b may be performed independently but may be performed consecutively.

Generally, although step 3b is performed in order of the capability information transfer procedure, the location assistance data transfer procedure, and the location information transfer procedure, step 3b is not limited to such order. In other words, step 3b is not required to occur in specific order in order to improve flexibility in positioning. For example, the UE may request the location assistance data at any time in order to perform a previous request for location measurement made by the LMF. The LMF may also request location information, such as a location measurement value or a location estimate value, at any time, in the case in which location information transmitted by the UE does not satisfy required QoS. Similarly, when the UE does not perform measurement for location estimation, the UE may transmit the capability information to the LMF at any time.

In step 3b, when information or requests exchanged between the LMF and the UE are erroneous, an error message may be transmitted and received and an abort message for aborting positioning may be transmitted and received.

Protocol used in step 3b may be an LPP protocol which will be described later.

Step 3b may be performed additionally after step 3a but may be performed instead of step 3a.

In step 4, the LMF may provide a location service response to the AMF. The location service response may include information as to whether UE positioning is successful and include a location estimate value of the UE. If the procedure of FIG. 7 has been initiated by step 1a, the AMF may transfer the location service response to a 5GC entity such as a GMLC. If the procedure of FIG. 7 has been initiated by step 1b, the AMF may use the location service response in order to provide a location service related to an emergency call.

## 2.5. Positioning Protocol

LTE Positioning Protocol (LPP)

FIG. 8 illustrates an exemplary protocol layer used to support LPP message transfer between an LMF and a UE. An LPP protocol data unit (PDU) may be carried in a NAS PDU between an AMF and the UE.

Referring to FIG. 8, LPP is terminated between a target device (e.g., a UE in a control plane or an SUPL enabled terminal (SET) in a user plane) and a location server (e.g., an LMF in the control plane or an SLP in the user plane). LPP messages may be carried as transparent PDUs cross intermediate network interfaces using appropriate protocols, such an NGAP over an NG-C interface and NAS/RRC over LTE-Uu and NR-Uu interfaces. LPP is intended to enable positioning for NR and LTE using various positioning methods.

For example, a target device and a location server may exchange, through LPP, capability information therebetween, assistance data for positioning, and/or location information. The target device and the location server may exchange error information and/or indicate abort of an LPP procedure, through an LPP message.

NR Positioning Protocol A (NRPPa)

FIG. 9 illustrates an exemplary protocol layer used to support NRPPa PDU transfer between an LMF and an NG-RAN node.

NRPPa may be used to carry information between an NG-RAN node and an LMF. Specifically, NRPPa may carry an E-CID for measurement transferred from an ng-eNB to an LMF, data for support of an OTDOA positioning method, and a cell-ID and a cell position ID for support of an NR cell ID positioning method. An AMF may route NRPPa PDUs based on a routing ID of an involved LMF over an NG-C interface without information about related NRPPa transaction.

An NRPPa procedure for location and data collection may be divided into two types. The first type is a UE associated procedure for transfer of information about a particular UE (e.g., location measurement information) and the second type is a non-UE-associated procedure for transfer of information applicable to an NG-RAN node and associated TPs (e.g., gNB/ng-eNB/TP timing information). The two types may be supported independently or may be supported simultaneously.

## 2.6. Positioning Measurement Method

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

OTDOA (Observed Time Difference Of Arrival)

FIG. 10 is a diagram illustrating an observed time difference of arrival (OTDOA) positioning method, to which various embodiments are applicable;
The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 5 below.

[Equation 5]

$$RSTDi_{,1}=\frac{\sqrt{(x_t-x_i)^2+(y_t-y_i)^2}}{c}-\frac{\sqrt{(x_t-x_1)^2+(y_t-y_1)^2}}{c}+(T_i-T_1)+(n_i-n_1)$$

In Equation 5, c is the speed of light, {$x_t$, yt} are (unknown) coordinates of a target UE, {xi, yi} are (known) coordinates of a TP, and {$x_1$, $y_1$} are coordinates of a reference TP (or another TP). Here, (Ti-Ti) is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

- UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io
- E-UTRAN measurement: ng-eNB Rx-Tx time difference, timing advance (TADV), and/or AoA

Here, TADV may be divided into Type 1 and Type 2 as follows.

$T_{ADV}$ Type 1 = (ng-eNB Rx-Tx time difference)+(UE E-UTRA Rx-Tx time difference)
TADV Type 2 = ng-eNB Rx-Tx time difference

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

Multi RTT (Multi-cell RTT)

FIG. 11 is a diagram illustrating an exemplary multi-round trip time (multi-RTT) positioning method to which various embodiments are applicable.
Referring to FIG. 1 1(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.
In operation 1301 according to various embodiments, the initiating device may transmit an RTT measurement request, and the responding device may receive the RTT measurement request.
In operation 1303 according to various embodiments, the initiating device may transmit an RTT measurement signal at t0 and the responding device may acquire a ToA measurement t1.
In operation 1305 according to various embodiments, the responding device may transmit an RTT measurement signal at t2 and the initiating device may acquire a ToA measurement t3.
In operation 1307 according to various embodiments, the responding device may transmit information about [t2-t1], and the initiating device may receive the information and calculate an RTT by Equation 6. The information may be transmitted and received based on a separate signal or in the RTT measurement signal of operation 1305.

[Equation 6]

$$\mathrm{RTT} = t_3 - t_0 - [t_2 - t_1]$$

Referring to FIG. 11(b), an RTT may correspond to a double-range measurement between two devices. Positioning estimation may be performed from the corresponding information, and multilateration may be used for the positioning estimation, $d_1$, $d_2$, and $d_3$ may be determined based on the measured RTT, and the location of a target device may be determined to be the intersection of the circumferences of circles with radiuses of $d_1$, $d_2$, and $d_3$, in which $BS_1$, $BS_2$, and $BS_3$ (or TRPs) are centered, respectively.

### 2.7. Sounding Procedure

In a wireless communication system to which various embodiments are applicable, an SRS for positioning may be used.
An SRS-Config information element (IE) may be used to configure SRS transmission. (A list of) SRS resources and/or (a list of) SRS resource sets may be defined, and each resource set may be defined as a set of SRS resources.
The *SRS-Config* IE may include configuration information on an SRS (for other purposes) and configuration information on an SRS for positioning separately. For example, configuration information on an SRS resource set for the SRS (for other purposes) (e.g., *SRS-ResourceSet*) and configuration information on an SRS resource set for the SRS for positioning (e.g., *SRS-PosResourceSet*) may be included separately. In addition, configuration information on an SRS resource for the SRS (for other purposes) (e.g., *SRS-ResourceSet*) and configuration information on an SRS resource for the SRS for positioning (e.g., *SRS PosResource*) may be included separately.
An SRS resource set for positioning may include one or more SRS resources for positioning. Configuration information on the SRS resource set for positioning may include: information on an identifier (ID) that is assigned/allocated/related to the SRS resource set for positioning; and information on an ID that is assigned/allocated/related to each of the one or more SRS resources for positioning. For example, configuration information on an SRS resource for positioning may include an ID assigned/allocated/related to a UL resource. In addition, each SRS resource/SRS resource set for positioning may be identified based on each ID assigned/allocated/related thereto.

The SRS may be configured periodically/semi-persistently/aperiodically.

An aperiodic SRS may be triggered by DCI. The DCI may include an SRS request field.

Table 6 shows an exemplary SRS request field.

[Table 6]

| Value of SRS request field | Triggered aperiodic SRS resource set(s) for DCI format 0_1, 0_2, 1_1, 1_2, and 2_3 configured with higher layer parameter srs-TPC-PDCCH-*Group* set to 'typeB' | Triggered aperiodic SRS resource set(s) for DCI format 2_3 configured with higher layer parameter srs-TPC-*PDCCH-Group* set to 'typeA' |
|---|---|---|
| 00 | No aperiodic SRS resource set triggered | No aperiodic SRS resource set triggered |
| 01 | SRS resource set(s) configured by *SRS-ResourceSet* with higher layer parameter *aperiodicSRS-Resource Trigger* set to 1 or an entry in *aperiodicSRS-Resource TriggerList* set to 1<br>SRS resource set(s) configured by *SRS-PosResourceSet* with an entry in aperiodicSRS-*Resource TriggerList* set to 1 when triggered by DCI formats 0_1, 0_2, 1_1, and 1_2 | SRS resource set(s) configured with higher layer parameter *usage* in SRS-*ResourceSet* set to *'antennaSwitching'* and resource Type in *SRS-ResourceSet* set to 'aperiodic' for a 1st set of serving cells configured by higher layers |
| 10 | SRS resource set(s) configured by *SRS-ResourceSet* with higher layer parameter *aperiodicSRS-ResourceTrigger* set to 2 or an entry in *aperiodicSRS-ResourceTriggerList* set to 2<br>SRS resource set(s) configured by *SRS-PosResourceSet* with an entry in *aperiodicSRS-ResourceTriggerList* set to 2 when triggered by DCI formats 0_1,0_2, 1_1, and 1_2 | SRS resource set(s) configured with higher layer parameter usage in *SRS-ResourceSet* set to *'antennaSwitching'* and resource Type in *SRS-ResourceSet* set to 'aperiodic' for a 2nd set of serving cells configured by higher layers |
| 11 | SRS resource set(s) configured by *SRS-ResourceSet* with higher layer parameter aperiodicSRS-*ResourceTrigger* set to 3 or an entry in *aperiodicSRS-Resource TriggerList* set to 3<br>SRS resource set(s) configured by *SRS-PosResourceSet* with an entry in *aperiodicSRS-ResourceTriggerList* set to 3 when triggered by DCI formats 0_1, 0_2, 1_1, and 1_2 | SRS resource set(s) configured with higher layer parameter usage in *SRS-ResourceSet* set to '*antennaSwitching*' and resource Type in *SRS-ResourceSet* set to 'aperiodic' for a 3rd set of serving cells configured by higher layers |

In Table 6 srs-TPC-PDCCH-Group is a parameter for setting the triggering type for SRS transmission to type A or type B, aperiodicSRS-ResourceTriggerList is a parameter for configuring an additional list of DCI code points where the UE needs to transmit the SRS according to the SRS resource set configuration, aperiodicSRS-ResourceTrigger is a parameter for configuring a DCI code point where the SRS needs to be transmitted according to the SRS resource set configuration, and resourceType is a parameter for configuring (periodic/semi-static/aperiodic) time domain behavior of the SRS resource configuration.

## 3. Various Embodiments

A detailed description will be given of various embodiments based on the above technical ideas. The afore-described contents of Section 1 and Section 2 are applicable to various embodiments described below. For example, operations, functions, terminologies, and so on which are not defined in various embodiments may be performed and described based on Section 1 and Section 2.

Symbols/abbreviations/terms used in the description of various embodiments may be defined as follows.

- A/B/C : A and/or B and/or C
- AOA (AoA) : angle of arrival
- AOD (AoD) : angle of departure
- CSI-RS : channel state information reference signal
- LMF : location management function
- NRPPa : NR positioning protocol a
- OTDOA (OTDoA) : observed time difference of arrival
- PRS : positioning reference signal
- RS : reference signal
- RTT : round trip time
- RSRP : reference signal received power
- RSRQ : reference signal received quality
- RSTD : reference signal time difference / relative signal time difference
- SINR : signal to interference plus noise ratio)
- SNR : signal to noise ratio
- SRS : sounding reference signal. In the description of various embodiments, the SRS may be an SRS for positioning (SRS) and/or a multi input multi output (MIMO) SRS (or normal SRS) used for channel estimation/beam management.
- SS : synchronization signal
- SSB : synchronization signal block
- SS/PBCH : synchronization signal/physical broadcast channel
- TA : timing advance / time advance
- TDOA (TDoA) : timing difference of arrival
- TOA (ToA) : time of arrival
- TRP : transmission and reception point (TP : transmission point)
- UTDOA (UTDoA) : uplink time difference of arrival

In the description of various embodiments, the term "BS" may be understood as an umbrella term including a remote radio head (RRH), an eNB, a gNB, a TP, a reception point (RP), a relay, etc.

In the description of various embodiments, when it is said that something is more than/more than or equal to A, it may be interpreted to mean that the thing is more than or equal to/more than A.

In the description of various embodiments, when it is said that something is less than/less than or equal to B, it may be interpreted to mean that the thing is less than or equal to/less than B.

Unless specifically stated otherwise, the operation of the UE mentioned in the description of various embodiments may be configured/instructed from the base station (BS)/location server/network or performed autonomously by the UE.

Unless specifically stated otherwise, the operation of the BS mentioned in the description of various embodiments may be configured/instructed by the location server or performed autonomously by the BS.

Unless specifically stated otherwise, the operation of the location server mentioned in the description of various embodiments may be set/instructed by the BS or performed autonomously by the location server.

In a wireless communication system to which various embodiments are applicable, the location of a UE may be measured/estimated using a DL-AoD technique. To this end, the network may configure/instruct a DL PRS to the UE. And/or, the UE may use a fixed Rx beam in a specific direction for multiple PRS resources transmitted by a specific cell/BS/TRP, and the UE may report an index of an Rx beam used by the UE to the network.

In a DL-AoD-based UE positioning technique of a wireless communication system to which various embodiments are applicable, a UE may receive a PRS transmitted by a specific cell/BS/TRP in a specific Tx beam direction, RSRP measurement(s) for a Tx beam of each cell/BS/TRP may be measured, and it may be estimated/predicted that a UE in a direction with the highest RSRP, and accordingly, the location of the UE may be identified.

However, it may not be ensured that an analog beam direction in a line of sight (LoS) direction between a specific TRP and a UE is a direction with the highest RSRP. For example, when penetration loss is severe due to blockage/obstacle between the specific TRP and the UE, a transmit/receive beam pair in a direction other than the LoS direction may be a direction with the maximum RSRP. In this case, there may be a problem that a large DL-AoD-based UE positioning error occurs.

As described above, due to the characteristics of angle-based positioning measurement, it may not be ensured that the RSRP of the beam in the LoS direction between the TRP and the UE is always maximized.

Various embodiments may be related to technical attributes required to effectively locate a UE through a DL-AoD UE positioning technique. For example, when the position of the UE is estimated using RSRP measurement, a method using timing measurement by considering that positioning accuracy may be insufficient and/or a method of determining the location of the UE by considering that the UE may be between a Tx beam and a beam of the BS may be proposed.

Various embodiments may relate to improving the accuracy of angle-based positioning measurements, such as DL AoD. According to various embodiments, in a first stage, the UE may transmit the PRS using a fixed Rx beam and a TRP may use a wide beam, and accordingly, the PRS may be transmitted. According to various embodiments, in a second stage, the UE may transmit the PRS using a plurality of Rx beams and the TRP may use a narrow beam, and accordingly, the PRS may be transmitted. According to various embodiments, the QCL type-D of the DL PRS resource configured in the UE may be configured/instructed by angle-based positioning measurement separately from timing basis, and/or the UE may not follow the configured QCL.

In the description of various embodiments to be described later, a relationship between the TRP and the UE is mainly described. However, the TRP may be a specific UE as well as a cell/BS, and various embodiments may be applied even when AoD is used for position estimation/measurement between UEs.

FIG. 13 is a simplified diagram illustrating an operating method of a UE, a TRP, a location server, and/or an LMF according to various embodiments.

Referring to FIG. 13, in operation 1301 according to various embodiments, the location server and/or the LMF may transmit configuration information to the UE, and the UE may receive the configuration information.

In operation 1303 according to various embodiments, the location server and/or the LMF may transmit reference configuration information to the TRP, and the TRP may receive the reference configuration information. In operation 1305 according to various embodiments, the TRP may transmit the reference configuration information to the UE, and the UE may receive the reference configuration information. In this case, operation 1301 according to various embodiments may be omitted.

In contrast, operations 1303 and 1305 according to various embodiments may be omitted. In this case, operation 1301 according to various embodiments may be performed.

That is, operation 1301 according to various embodiments, and operations 1303 and 1305 according to various embodiments may be selectively performed.

In operation 1307 according to various embodiments, the TRP may transmit a signal related to the configuration information, and the UE may receive the signal related to the configuration information. For example, the signal related to the configuration information may be a signal for positioning of the UE.

In operation 1309 according to various embodiments, the UE may transmit a signal related to positioning to the TRP, and the TRP may receive the signal related to positioning. In operation 1311 according to various embodiments, the TRP may transmit the signal related to positioning to the location server and/or the LMF, and the location server and/or the LMF may receive the signal related to positioning.

In operation 1313 according to various embodiments, the UE may transmit the signal related to positioning to the location server and/or the LMF, and the location server and/or the LMF may receive the signal related to positioning. In this case, operations 1309 and 1311 according to various embodiments may be omitted.

In contrast, operation 1313 according to various embodiments may be omitted. In this case, operations 1309 and 1311 according to various embodiments may be performed.

That is, operations 1309 and 1311 according to various embodiments, and operation 1313 according to various embodiments may be selectively performed.

According to various embodiments, the signal related to positioning may be obtained based on the configuration information and/or the signal related to the configuration information.

FIG. 14 is a simplified diagram illustrating an operating method of a UE, a TRP, a location server, and/or an LMF according to various embodiments.

Referring to FIG. 14(a), in operation 1401(a) according to various embodiments, the UE may receive configuration information.

In operation 1403(a) according to various embodiments, the UE may receive a signal related to the configuration information.

In operation 1405(a) according to various embodiments, the UE may transmit information related to positioning.

Referring to FIG. 14(b), in operation 1401(b) according to various embodiments, the TRP may receive configuration information from the location server and/or the LMF and transmit the configuration information to the UE.

In operation 1403(b) according to various embodiments, the TRP may transmit a signal related to the configuration information.

In operation 1405(b) according to various embodiments, the TRP may receive information related to positioning and transmit the information related to positioning to the location server and/or the LMF.

Referring to FIG. 14(c), in operation 1401(c) according to various embodiments, the location server and/or the LMF may transmit configuration information.

In operation 1405(c) according to various embodiments, the location server and/or the LMF may receive information related to positioning.

For example, the above-described configuration information may be understood as relating to reference configuration (information) or one or more pieces of information that the location server, the LMF, and/or the TRP transmits to/configures for the UE and/or may be understood as the reference configuration (information) or one or more pieces of information that the location server, the LMF, and/or the TRP transmits to/configures for the UE, in a description of various embodiments below.

For example, the above signal related to positioning may be understood as a signal related to one or more pieces of information that the UE reports and/or a signal including one or more pieces of information that the UE reports, in a description of various embodiments below.

For example, in a description of various embodiments below, the BS, the gNB, and the cell may be replaced with the TRP, the TP, or any device serving equally as the TRP or the TP.

For example, in a description of various embodiments below, the location server may be replaced with the LMF and any device serving equally as the LMF.

More detailed operations, functions, terms, etc. in operation methods according to various embodiments may be performed and described based on various embodiments described later. The operation methods according to various embodiments are exemplary and one or more operations in the above-described operation methods may be omitted according to detailed content of each embodiment.

Hereinafter, various embodiments will be described in detail. It may be understood by those of ordinary skill in the art that the various embodiments described below may be combined in whole or in part to implement other embodiments unless mutually exclusive.

According to various embodiments, reinforcement on DL-AoD based timing measurement may be made. According to various embodiments, RSTD measurement for a DL-AoD technique may be proposed.

**Proposal##**

According to various embodiments, a UE may additionally and/or simultaneously acquire PRS RSTD measurement in addition to RSRP measurement for the DL-AoD positioning technique. According to various embodiments, characteristically, when a UE performs RSTD measurement for the DL-AoD technique, the UE may determine a reference timing, which is a reference for RSTD, as any specific time.

For example, the UE may configure/receive reference configuration information related to a DL PRS resource available as a reference for DL RSTD and/or DL-PRS-RSRP and/or UE reception-transmission time difference measurement from a network. For example, information provided from the reference configuration information may include a list (reference PRS resource ID) of a cell/BS/TRP ID (reference cell/BS/TRP ID) and/or a DL PRS resource set ID (reference PRS resource set ID) and/or one PRS resource ID, and/or a DL PRS resource ID. According to various embodiments, a top priority may be assigned to a reference cell/BS/TRP and/or a reference PRS resource set and/or a reference PRS resource that respectively correspond to the reference cell/BS/TRP ID and/or the reference PRS resource set ID and/or the reference PRS resource ID included in the information provided from the reference configuration information. For example, the UE may use the information provided from the reference configuration information as a reference and/or (in the case of a DL PRS resource included in one DL PRS resource set) use/determine a DL PRS resource set ID and/or a DL PRS resource (and/or cell/BS/TRP ID) different from the information provided from the reference configuration information as a reference. However, for example, even when a reference is determined using information different from the information provided from the reference configuration information, assignment of the top priority may mean configuration and indication from the reference configuration information (configuration/indication to the reference cell/BS/TRP ID and/or the reference PRS resource set ID and/or the reference PRS resource ID from the reference configuration information).

According to various embodiments, in order to determine/acquire a reference and/or a reference timing, the UE may not determine the reference timing based on measurement for a PRS transmitted at a specific TRP as well as a reference TRP, a reference PRS resource, and/or a reference PRS resource included in the reference configuration configured from a network. For example, since an operation of the UE is to select and report a specific PRS resource having the shortest propagation time and/or RSTD for a PRS resource transmitted from a specific cell/BS/TRP, an absolute propagation time and /or an RSTD may not be important, and a relative propagation time and/or an RSTD value may be important. According to various embodiments, in terms of the UE, processing may not be performed to determine the reference timing, and thus power of the UE may not be wasted.

**Proposal##**

According to various embodiments, for an effective DL-AOD-based UE positioning technique, a UE may report a PRS resource ID and/or a PRS resource set ID for which the estimated RSTD is minimized, to a network. And/or, according to various embodiments, the UE may report K (K being a natural number) PRS resource IDs (and/or PRS resource set IDs), from which measurement of the minimum RSTD is to be acquired + PRS resources included in the PRS resource set, to the network. For example, the PRS resources included in the PRS resource set may be reported in a hierarchical structure. For example, the K PRS resource IDs may be reported independently rather than in association with a PRS resource set, and reporting a PRS resource included in a PRS resource set indicates that a PRS resource belonging to a specific PRS resource set are reported. However, various embodiments are not limited to this example.

According to various embodiments, as the UE reports specific PRS resource information to the network based on timing measurement, the network may find the location of the UE by additionally utilizing the timing measurement information as well as the reported RSRP information.

For example, the network may predict/estimate/determine which Tx beam direction is the LoS direction based on information having a minimum RSTD even if a specific PRS resource does not have a maximum RSRP measurement.

According to various embodiments, an operation of a UE to be different for each technique with respect to beam configuration may be proposed.

For example, in the PRS resource, QCL type-D may be configured for use/configuration/recommendation of a reception beam of the UE. According to various embodiments, in the DL-TDOA technique and the Multi-RTT technique, the UE may follow the QCL type-D configuration of the DL PRS resource configured in the UE as it is. According to various embodiments, in the DL-AoD technique, the UE may disregard the QCL type-D configuration configured in the PRS.

For example, the UE needs to measure the PRS resource with a specific Rx beam, and the PRS resource configured in the UE may be commonly used in DL-TDOA, Multi-RTT, and/or DL-AoD techniques. For example, the network may configure the QCL type-D for the PRS resource in consideration of the location of the UE. However, in the DL-AoD technique, since the UE needs to perform PRS RSRP measurement for multiple PRS resources with a specific reception RX beam, the configured QCL type -D configuration may have to be disregarded.

According to various embodiments, if QCL type-D is configured for a specific PRS resource, the UE may always follow the QCL type-D configuration. That is, the UE may disregard this and may follow the QCL type-D configuration without determining and using the Rx beam direction by itself.

For example, it may be assumed that when the UE reports to the LMF that the RX beam index #1 is used for measurement of PRS resources #1/#2/#3, the LMF/BS configures the QCL type-DRS for the PRS resources #1/#2/#3 as SSB#1 in the UE. For example, since the UE uses an Rx beam in completely different directions, it may be difficult for the network to predict a reception beam gain.

According to various embodiments, through this operation, the network may configure QCL type-D to a specific DL RS resource for specific PRS resources #1/#2 in the UE. According to various embodiments, the UE may be predicted to measure the DL PRS resources #1/#2 (e.g., RSRP, SINR, SNR, timing measurement, or RSTD) using the Rx beam for receiving an RS configured in the QCL type-D.

According to various embodiments, in this way, in the DL-AoD technique, when a distance between a specific TRP for transmitting the PRS resource and the UE is predicted/measured/estimated by the received signal size of the UE (e.g., RSRP, SNR, or SINR), the reception Rx beam gain and/or spatial Rx filter gain of the UE may be applied. For example, when the UE does not follow the QCL type-D configuration of the network and selects another reception Rx beam, it may be difficult for the network to predict/reflect/consider the specific Rx beam gain and/or spatial Rx filter gain used by the UE.

According to various embodiments, the UE may be configured with SRS resources for positioning in order to perform UL-based positioning and/or multi-RTT-based positioning operations. According to various embodiments, the UE may disregard spatial relation information configuration configured for each SRS resource according to the UL-AoA/UL-TDoA technique and the multi-RTT technique.

For example, in the case of the multi-RTT technique, the UE may determine a Tx beam according to the spatial relation information configured in the SRS resource for positioning. On the other hand, for example, in the case of the UL-TDOA/AoA technique, the UE may perform transmission while sweeping a transmission Tx beam without following the spatial relation information configuration of the SRS resource configured for the purpose of positioning.

For example, in the case of UL-AoA, a direction in which the UE is located may be predicted more accurately by the BS/TRP fixing a specific reception RX beam and the UE receiving SRS resources transmitted in various directions while changing the transmission Tx beam.

For example, the operation of disregarding the spatial relation information configuration of the UE may be automatically recognized by the UE when the UL-AoA technique is driven, or may be instructed/configured by the network.

**Proposal##**

For example, for DL-AoD positioning, a specific reception Rx beam used by a UE for a specific TRP needs to be an Rx beam to be ensured with an RSRP equal to or higher than a specific threshold/level/layer for a TRP.

According to various embodiments, this operation of the UE may be performed when the UE reports the reception Rx beam index/ID used to measure multiple PRS resources. According to various embodiments, the operation of the UE may be configured/instructed from a network.

For example, the UE may perform PRS resource measurement using a reception RX beam in a specific direction without following the QCL type-D configuration of the network. However, in this case, if the direction of the reception beam of the UE is too different from the specific TRP direction, the RSRP measurement value itself is significantly low, and it may be difficult to find the direction in which the UE is located only by changing the RSRP value. Accordingly, a reception beam that is used by the UE in a fixed manner for a plurality of PRS resources transmitted by a specific TRP may need to be a reception beam oriented (to some extent) in the direction of the specific TRP.

For example, in order to ensure positioning accuracy, a UE may need to measure RSRP or the like using an Rx beam for which a certain level or higher quality is ensured for a PRS resource transmitted at a specific TRP.

Transmission beam resolution problem

For the accuracy of the DL-AoD positioning technique, it is necessary to discuss how to estimate the location of a UE when the UE is located between two Tx beams.

FIG. 14 is a diagram for explaining a Tx beam resolution problem to which various embodiments are applicable.

Referring to FIG. 14, for example, the location of a UE may be between two Tx beams. For example, it may be assumed that the UE is located in a specific region between two transmission bins indicated by PRS resource #1 and PRS resource #2 transmitted from the TRP. For example, when an Rx beam direction directed toward PRS resource #2 is used, an RSRP of PRS resource #2 may be the largest among a plurality of PRS resources transmitted from the TRP. For example, based on the reported RPRP measurement, the LMF may estimate the location of the UE in a direction of the Tx beam of PRS resource #2. However, since the actual location of the UE is between the Tx beam of PRS resource #1 and the Tx beam of PRS resource #2, when the position of the UE is estimated in a direction of the Tx beam of PRS resource #2, accuracy may be reduced.

Therefore, in positioning of a wireless communication system to which various embodiments are applicable (e.g., a wireless communication system supporting Release-17 and later releases), there is a need to discuss a method for resolving accuracy degradation due to the resolution problem.

FIG. 15 is a diagram illustrating an example of 2-step PRS transmission and reception according to various embodiments.

According to various embodiments, 2-step PRS transmission and reception may be considered to resolve the above-described problem.

(Step 1) Referring to FIG. 15(a), according to various embodiments, each TRP may transmit a PRS using a relatively wide beam. According to various embodiments, a UE may obtain PRS and/or RSRP measurement using a fixed reception beam. According to various embodiments, the UE may report a PRS-based measurement (e.g., RSRP measurement) to a network, and the network (LMF) may roughly estimate that the UE is located within a specific area/direction.

(Step 2) Referring to FIG. 15(b), according to various embodiments, after finding an rough location, the TRP may transmit a PRS using a relatively narrow beam covering a relatively small area. According to various embodiments, the UE may measure/receive each PRS resource using multiple Rx beams in order to search for an optimal (best) Rx/Tx beam pair. For example, each PRS resource may be measured/received during beam sweeping of a plurality of Rx beams. For example, the optimal beam pair may be a combination of Rx and Tx beams in which RSRP is maximized and/or received signal power of a first arrival signal path is maximized.

For example, at least, the maximum RSRP may be reported for each PRS resource by considering multiple Rx beams of the UE.

**Proposal##**

According to various embodiments, when a UE performs measurement on a DL PRS resource transmitted in a specific TRP, when DL-AoD-based UE positioning is performed, or when the UE does not perform measurement on the DL PRS resource using the same specific Rx beam, in consideration of an Rx to be used by the UE, the UE:

1) The UE may report the RSRP and/or PRS resource (PRS resource and/or PRS resource set including the PRS resource) corresponding to the maximum RSRP to a network. and/or

2) The UE may report to the network a PRS resource ID (and/or a PRS resource ID and a PRS resource set ID including the PRS resource) for which the propagation time of the first arrival time (LoS signal) is minimized. and/or

3) The UE may report to the network a PRS resource ID (and/or a PRS resource ID and a PRS resource set including the PRS resource) for which power of a signal path/element corresponding to the first arrival time (LoS signal) is maximized. and/or

4) As a threshold for a specific RSRP/SNR/signal-strength/SINR or the like is exceeded, the UE may report to the network a PRS ID (and/or a PRS resource ID and a PRS resource set ID including the PRS resource) for which the propagation time of the first arrival time (LoS signal) is minimized. According to various embodiments, a threshold for a specific RSRP/SNR or the like may be instructed/configured to the UE from the network.

According to various embodiments, the above-described operation of the network and/or the UE may be utilized in a procedure for more accurately finding the location of the UE in the second step after the rough location of the UE is obtained in the first step.

For example, a method of finding the location of the UE using Tx beam direction information of a BS may be considered. According to various embodiments, when locating the UE by a two-step based method, in a first step, in order to measure a rough location of the UE, the UE may use a specific reception RX beam, and the TRP may transmit the PRS while changing/sweeping a Tx beam. According to various embodiments, the UE may report a fixed RX beam used by the UE to the BS, and report an RSRP for each PRS resource measured with the Rx beam (and/or PRS resource ID and/or PRS resource set ID and/or propagation time and/or power) (and/or maximum RSRP and/or minimum propagation time and/or maximum power). For example, the network may find the rough location of the UE therethrough. A more specific example may refer to FIG. 15.

According to various embodiments, resource configuration for a PRS to be used in the first step and resource configuration for a PRS to be used in the second step may be separated. For example, the PRS resources to be used in the first step and the PRS resources to be used in the second step may be preconfigured. And/or, for example, at least some of the PRS resources to be used in the second step (and/or in the first step) may be candidates for the PRS resource to be used in the first step (and/or in the second step). And/or, for example, the UE may request a PRS resource for a narrow beam to be used in the second step, and in response to the request, the PRS resource for the narrow beam to be used in the second step may be configured.

According to various embodiments, after the rough location of the UE is obtained, a beam having a narrower beam width than a Tx beam used by the TRPBS in the first step may be used (in the second step) to accurately locate the UE. Even in this case, the UE may use a specific Rx beam, but when the UE does not know in advance the Rx beam in the LoS direction for the specific TRP, the UE may use the Rx beam in another direction.

For example, since RSRP measurement varies depending on the directivity/direction of the Rx beam and the direction of the Tx beam of the TRP, when the Rx beam of the UE is not a beam in the LoS direction, a UE positioning error may occur. Therefore, as in the example of FIG. 15, according to various embodiments, when the BS transmits the PRS to the UE using a narrow Tx beam, the UE also performs a process of finding a a TX/RX beam pair in which the beams of the UE and the BS are aligned in the LoS direction as much as possible by finding a PRS resource indicating the maximum RSRP while sweeping the Rx beam. Therefore, for example, in order to find the exact location of the UE, unless the UE accurately knows the Rx beam in the LoS direction for the specific TRP, there may be a need for a method in which the UE measures a plurality of PRS resources while sweeping/changing the Rx beam.

**Proposal##**

FIG. 16 is a diagram for explaining a linear combination factor of a plurality of beams according to various embodiments.

According to various embodiments, the UE may inform a linear combination factor for two or more beams (and/or a plurality of two or more PRS resources).

Referring to FIG. 16, for example, the following may be considered as a method for indicating that the UE is located between TX beam #1 (PRS resource #1) and TX beam #2 (PRS resource #2).

According to various embodiments, the UE may inform a specific coefficient value (e.g., $\lambda$ ). For example, it may be assumed that $a_1$ is an element indicating a beam direction of PRS resource #1 (e.g., a constant such as RSRP/angle and/or a vector), and $a_2$ is an element indicating a beam direction of PRS resource #2 (e.g., a constant such as RSRP/angle and/or a vector). According to various embodiments, the UE may inform that the UE is located between the directions for the two PRS TX beams through element $\lambda$ For example, $\lambda \times (a_1) + (1 - \lambda)(a_2)$ may be calculated. As seen from the example of FIG. 16, the UE is located between PRS resource #1 and PRS resource #2, and the UE is located between the PRS TX beams based on PRS measurement.

FIG. 17 is a brief diagram illustrating an operating method of a UE and network nodes according to various embodiments.

FIG. 18 is a flowchart illustrating an operating method of a UE according to various embodiments.

FIG. 19 is a flowchart illustrating an operating method of a network node according to various embodiments. For example, the network node may be a TP and/or a BS and/or a cell and/or a location server and/or an LMF and/or any device that performs the same operation.

Referring to FIGS. 17 to 19, in operations 1701, 1801, and 1901 according to various embodiments, the network may transmit a plurality of first positioning reference signals (PRSs) based on a plurality of first Tx beams, UE may receive the same.

In operations 1703, 1803, and 1903 according to various embodiments, the UE may transmit first information regarding at least one of one or more first measurements related to the plurality of first PRSs or one or more first PRS resource identifiers (IDs) related to the plurality of first PRSs and the network may receive the same.

In operations 1705, 1805, and 1905 according to various embodiments, the network may transmit a plurality of second PRSs based on a plurality of second Tx beams related to the first information, and the UE may receive the same.

In operations 1707, 1807, and 1907 according to various embodiments, the UE may transmit second information regarding at least one of one or more second measurements related to the plurality of second PRSs or one or more second PRS resource IDs related to the plurality of second PRSs and the network may receive the same.

More specific operations of the UE and/or network node according to various embodiments described above may be described and performed based on the contents of Sections 1 to 3 described above.

It is obvious that examples of the proposed method described above may also be included as one of various embodiments, and thus may be regarded as a kind of proposed method. In addition, the above-described proposed methods may be implemented independently, but may also be implemented in a combination (or merged) form of some proposed methods. Information regarding whether the proposed methods are applied (or information regarding rules of the proposed methods) may be defined such that the BS informs the UE through a predefined signal (e.g., a physical layer signal or a higher layer signal).

## 4. Example of device configuration in which various embodiments are implemented

### 4.1. Example of device configuration to which various embodiments are applied

FIG. 20 is a diagram illustrating a device in which various embodiments are implemented.

The device shown in FIG. 20 is a user equipment (UE) and/or a BS (e.g., eNB or gNB, or TP) and/or a location server (or LMF) adapted to perform the above-described mechanism, or any device that performs the same operation.

Referring to FIG. 20, the device may include a digital signal processor (DSP)/microprocessor 210 and a radio frequency (RF) module (transceiver) 235. The DSP/microprocessor 210 is electrically connected to the transceiver 235 to control the transceiver 235. According to selection of a designer, the device may further include a power management module 205, a battery 255, a display 215, a keypad 220, a SIM card 225, a memory device 230, an antenna 240, a speaker 245, and an input device 250.

In particular, FIG. 20 may also show a UE including a receiver 235 configured to receive a request message from a network and a transmitter 235 configured to transmit timing transmit/receive timing information to the network. The receivers and transmitters may constitute the transceiver 235. The UE may further include a processor 210 connected to the transceiver 235.

FIG. 20 may also show a network device including the transmitter 235 configured to transmit a request message to the UE and the receiver 235 configured to receive transmit/receive timing information from the UE. A transmitter and a receiver may constitute the transceiver 235. The network further includes the processor 210 connected to the transmitter and the receiver. The processor 210 may calculate latency based on transmission/reception timing information.

Accordingly, to a UE (or a communication device included in the UE) and/or a BS (or a communication device included in the BS) and/or a location server (or a communication device included in the location server) according to various embodiments. The included processor controls the memory and operates as follows.

In various embodiments, the UE or the BS or the location server may include at least one transceiver, one or more memories, and one or more processors connected to the transceiver and the memory. The memory may store instructions that enable one or more processors to perform the following operations.

At this time, the communication device included in the UE or the BS or the location server may be configured to include the one or more processors and the one or more memories, and the communication device may be configured to include the one or more transceivers or configured to be connected to the one or more transceivers without including the one or more transceivers.

A TP and/or a BS and/or a cell and/or a location server and/or an LMF and/or any device that performs the same operation may be referred to as a network node.

According to various embodiments, one or more processors included in the UE (or one or more processors of a communication device included in the UE) may receive a plurality of first positioning reference signals (PRSs) based on a plurality of first Tx beams.

According to various embodiments, one or more processors included in the UE may transmit first information regarding at least one of one or more first measurements related to the plurality of first PRSs or one or more first PRS resource IDs related to the plurality of first PRSs.

According to various embodiments, one or more processors included in the UE may receive a plurality of second PRSs based on a plurality of second Tx beams related to the first information.

According to various embodiments, one or more processors included in the UE may transmit second information related to at least one of one or more second measurements related to the plurality of second PRSs or one or more second PRS resource IDs related to the plurality of second PRSs.

According to various embodiments, one or more processors included in a network node (or one or more processors of a communication device included in the network node) may transmit a plurality of first positioning reference signals (PRSs) based on a plurality of first Tx beams.

According to various embodiments, one or more processors included in a network node may receive first information regarding at least one of one or more first measurements related to the plurality of first PRSs or one or more first PRS resource IDs related to the plurality of first PRSs.

According to various embodiments, one or more processors included in a network node may transmit a plurality of second PRSs based on a plurality of second Tx beams related to the first information.

According to various embodiments, one or more processors included in the network node may receive second information regarding at least one of one or more second measurements related to the plurality of second PRSs or one or more second PRS resource IDs related to the plurality of second PRSs.

Specific operations of the UE and/or the network node according to the above-described various embodiments may be described and performed based on Section 1 to Section 3 described before.

Unless contradicting each other, various embodiments may be implemented in combination. For example, (the processor included in) the UE and/or the network node according to various embodiments may perform operations in combination of the embodiments of the afore-described in Section 1 to Section 3, unless contradicting each other.

### 4.2. Example of Communication System to Which Various Embodiments Are Applied

Various embodiments have been mainly described in relation to data transmission and reception between a BS and a UE in a wireless communication system. However, various embodiments are not limited thereto. For example, various embodiments may also relate to the following technical configurations.

The various descriptions, functions, procedures, proposals, methods, and/or operational flowcharts of the various embodiments described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 21 illustrates an exemplary communication system to which various embodiments are applied.

Referring to FIG. 21, a communication system 1 applied to the various embodiments includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the various embodiments.

Example of wireless device to which various embodiments are applied

FIG. 22 illustrates exemplary wireless devices to which various embodiments are applicable.

Referring to FIG. 22, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 21.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In various embodiments, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In various embodiments, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

According to various embodiments, one or more memories (e.g., 104 or 204) may store instructions or programs which, when executed, cause one or more processors operably coupled to the one or more memories to perform operations according to various embodiments or implementations.

According to various embodiments, a computer-readable storage medium may store one or more instructions or computer programs which, when executed by one or more processors, cause the one or more processors to perform operations according to various embodiments or implementations.

According to various embodiments, a processing device or apparatus may include one or more processors and one or more computer memories connected to the one or more processors. The one or more computer memories may store instructions or programs which, when executed, cause the one or more processors operably coupled to the one or more memories to perform operations according to various embodiments or implementations.

Example of using wireless device to which various embodiments are applied

FIG. 23 illustrates other exemplary wireless devices to which various embodiments are applied. The wireless devices may be implemented in various forms according to a use case/service (see FIG. 21).

Referring to FIG. 23, wireless devices 100 and 200 may correspond to the wireless devices 100 and 200 of FIG. 22 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 22. For example, the transceiver(s) 114 may include the one or more transceivers 106 and 206 and/or the one or more antennas 108 and 208 of FIG. 22. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 21), the vehicles (100b-1 and 100b-2 of FIG. 21), the XR device (100c of FIG. 21), the hand-held device (100d of FIG. 21), the home appliance (100e of FIG. 21), the IoT device (100f of FIG. 21), a digital broadcast terminal, a hologram device, a public safety device, an MTC device, a medicine device, a Fintech device (or a finance device), a security device, a climate/environment device, the AI server/device (400 of FIG. 21), the BSs (200 of FIG. 21), a network node, etc. The wireless device may be used in a mobile or fixed place according to a use-example/service.

In FIG. 23, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 23 will be described in detail with reference to the drawings.

Example of portable device to which various embodiments are applied

FIG. 24 illustrates an exemplary portable device to which various embodiments are applied. The portable device may be any of a smartphone, a smartpad, a wearable device (e.g., a smartwatch or smart glasses), and a portable computer (e.g., a laptop). A portable device may also be referred to as mobile station (MS), user terminal (UT), mobile subscriber station (MSS), subscriber station (SS), advanced mobile station (AMS), or wireless terminal (WT).

Referring to FIG. 24, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 23, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

Example of vehicle or autonomous driving vehicle to which various embodiments are applied

FIG. 25 illustrates an exemplary vehicle or autonomous driving vehicle to which various embodiments are applied. The vehicle or autonomous driving vehicle may be implemented as a mobile robot, a car, a train, a manned/unmanned aerial vehicle (AV), a ship, or the like.

Referring to FIG. 25, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 23, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

In summary, various embodiments may be implemented through a certain device and/or UE.

For example, the certain device may be any of a BS, a network node, a transmitting UE, a receiving UE, a wireless device, a wireless communication device, a vehicle, a vehicle equipped with an autonomous driving function, an unmanned aerial vehicle (UAV), an artificial intelligence (AI) module, a robot, an augmented reality (AR) device, a virtual reality (VR) device, and other devices.

For example, a UE may be any of a personal digital assistant (PDA), a cellular phone, a personal communication service (PCS) phone, a global system for mobile (GSM) phone, a wideband CDMA (WCDMA) phone, a mobile broadband system (MBS) phone, a smartphone, and a multi-mode multi-band (MM-MB) terminal.

A smartphone refers to a terminal taking the advantages of both a mobile communication terminal and a PDA, which is achieved by integrating a data communication function being the function of a PDA, such as scheduling, fax transmission and reception, and Internet connection in a mobile communication terminal. Further, an MM-MB terminal refers to a terminal which has a built-in multi-modem chip and thus is operable in all of a portable Internet system and other mobile communication system (e.g., CDMA 2000, WCDMA, and so on).

Alternatively, the UE may be any of a laptop PC, a hand-held PC, a tablet PC, an ultrabook, a slate PC, a digital broadcasting terminal, a portable multimedia player (PMP), a navigator, and a wearable device such as a smartwatch, smart glasses, and a head mounted display (HMD). For example, a UAV may be an unmanned aerial vehicle that flies under the control of a wireless control signal. For example, an HMD may be a display device worn around the head. For example, the HMD may be used to implement AR or VR.

The wireless communication technology in which various embodiments are implemented may include LTE, NR, and 6G, as well as narrowband Internet of things (NB-IoT) for low power communication. For example, the NB-IoT technology may be an example of low power wide area network (LPWAN) technology and implemented as the standards of LTE category (CAT) NB1 and/or LTE Cat NB2. However, these specific appellations should not be construed as limiting NB-IoT. Additionally or alternatively, the wireless communication technology implemented in a wireless device according to various embodiments may enable communication based on LTE-M. For example, LTE-M may be an example of the LPWAN technology, called various names such as enhanced machine type communication (eMTC). For example, the LTE-M technology may be implemented as, but not limited to, at least one of 1) LTE CAT 0, 2) LTE Cat M1, 3) LTE Cat M2, 4) LTE non-bandwidth limited (non-BL), 5) LTE-MTC, 6) LTE machine type communication, and/or 7) LTE M. Additionally or alternatively, the wireless communication technology implemented in a wireless device according to various embodiments may include, but not limited to, at least one of ZigBee, Bluetooth, or LPWAN in consideration of low power communication. For example, ZigBee may create personal area networks (PANs) related to small/low-power digital communication in conformance to various standards such as IEEE 802.15.4, and may be referred to as various names.

Various embodiments may be implemented in various means. For example, various embodiments may be implemented in hardware, firmware, software, or a combination thereof.

In a hardware configuration, the methods according to exemplary embodiments may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the methods according to the various embodiments may be implemented in the form of a module, a procedure, a function, etc. performing the above-described functions or operations. A software code may be stored in the memory 50 or 150 and executed by the processor 40 or 140. The memory is located at the interior or exterior of the processor and may transmit and receive data to and from the processor via various known means.

Those skilled in the art will appreciate that the various embodiments may be carried out in other specific ways than those set forth herein without departing from the spirit and essential characteristics of the various embodiments. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. It is obvious to those skilled in the art that claims that are not explicitly cited in each other in the appended claims may be presented in combination as an embodiment or included as a new claim by a subsequent amendment after the application is filed.

## INDUSTRIAL APPLICABILITY

The various embodiments are applicable to various wireless access systems including a 3GPP system, and/or a 3GPP2 system. Besides these wireless access systems, the various embodiments are applicable to all technical fields in which the wireless access systems find their applications. Moreover, the proposed method may also be applied to mmWave communication using an ultra-high frequency band.

## Claims

1. A method performed by a user equipment (UE) in a wireless communication system, the method comprising:

   receiving a plurality of first positioning reference signal (PRS) based on a plurality of first transmission (Tx) beams;
   transmitting first information regarding at least one of one or more first measurements related to the plurality of first PRSs or one or more first PRS resource identifiers (IDs) related to the plurality of first PRSs;
   receiving a plurality of second PRSs based on a plurality of second Tx beams related to the first information; and
   transmitting second information regarding at least one of one or more second measurements related to the plurality of second PRSs or one or more second PRS resource IDs related to the plurality of second PRSs.

2. The method of claim 1, wherein the one or more first measurements are:

   a maximum reference signal received power (RSRP) among reference signal received powers (RSRPs) acquired from the plurality of first PRSs,
a minimum propagation time among propagation times of first arrival signal paths acquired from the plurality of first PRSs, or
a maximum power among powers of the first arrival signal paths.

**3.** The method of claim 2, wherein:

based on that the one or more first measurements are the maximum RSRP, the one or more first PRS resource IDs are a PRS resource ID related to a PRS corresponding to the maximum RSRP among the plurality of first PRSs;
based on that the one or more first measurements are the minimum propagation time, the one or more first PRS resource IDs are a PRS resource ID related to a PRS corresponding to the minimum propagation time among the plurality of first PRSs; and
based on that the one or more first measurements are the maximum power, the one or more first PRS resource IDs are a PRS resource ID related to a PRS corresponding to the maximum power among the plurality of first PRSs.

**4.** The method of claim 1, wherein:

the UE is configured to support a plurality of Rx beams;
the plurality of first PRSs are received using one reception (Rx) beam among the plurality of Rx beams;
the plurality of second PRSs are received using beam sweeping based on at least some Rx beams among the plurality of Rx beams; and
the method further includes transmitting information regarding an ID of the one Rx beam.

**5.** The method of claim 1, wherein:

a beam width of each of the plurality of first Tx beams is greater than a beam width of each of the plurality of second Tx beams; and
the plurality of second Tx beams are configured based on an estimated location of the UE estimated from the first information.

**6.** The method of claim 1, wherein each of the first information and the second information are included in information related to downlink-angle of departure (DL-AoD) measurement reporting.

**7.** A user equipment (UE) operating in a wireless communication system, the UE comprising:

a transceiver; and
one or more processors connected to the transceiver,
wherein the one or more processors are configured to:

receive a plurality of first positioning reference signals (PRSs) based on a plurality of first transmission (Tx) beams;
transmit first information regarding at least one of one or more first measurements related to the plurality of first PRSs or one or more first PRS resource identifiers (IDs) related to the plurality of first PRSs;
receive a plurality of second PRSs based on a plurality of second Tx beams related to the first information; and
transmit second information regarding at least one of one or more second measurements related to the plurality of second PRSs or one or more second PRS resource IDs related to the plurality of second PRSs.

**8.** The UE of claim 7, wherein the one or more first measurements are:

a maximum reference signal received power (RSRP) among reference signal received powers (RSRPs) acquired from the plurality of first PRSs,
a minimum propagation time among propagation times of first arrival signal paths acquired from the plurality of first PRSs, or
a maximum power among powers of the first arrival signal paths.

**9.** The UE of claim 8, wherein:

based on that the one or more first measurements are the maximum RSRP, the one or more first PRS resource IDs are a PRS resource ID related to a PRS corresponding to the maximum RSRP among the plurality of first PRSs;
based on that the one or more first measurements are the minimum propagation time, the one or more first PRS resource IDs are a PRS resource ID related to a PRS corresponding to the minimum propagation time among the plurality of first PRSs; and
based on that the one or more first measurements are the maximum power, the one or more first PRS resource IDs are a PRS resource ID related to a PRS corresponding to the maximum power among the plurality of first PRSs.

**10.** The UE of claim 7, wherein:

the one or more processors are configured to support the plurality of Rx beams;
the plurality of first PRSs are received using one reception (Rx) beam among the plurality of Rx beams;
the plurality of second PRSs are received using beam sweeping based on at least some Rx beams among the plurality of Rx beams; and
the one or more processors are configured to transmit information regarding an ID of the one Rx beam.

**11.** The UE of claim 7, wherein the one or more processors are configured to communicate with one or more of: a mobile terminal, a network, and an autonomous vehicle other than a vehicle including the UE.

**12.** A method performed by a base station (BS) in a wireless communication system, the method comprising:

transmitting a plurality of first positioning reference signal (PRS) based on a plurality of first transmission (Tx) beams;
receiving first information regarding at least one of one or more first measurements related to the plurality of first PRSs or one or more first PRS resource identifiers (IDs) related to the plurality of first PRSs;
transmitting a plurality of second PRSs based on a plurality of second Tx beams related to the first information; and
receiving second information regarding at least one of one or more second measurements related to the plurality of second PRSs or one or more second PRS resource IDs related to the plurality of second PRSs.

**13.** A base station (BS) operating in a wireless communication system, the BS comprising:

a transceiver; and
one or more processors connected to the transceiver,
wherein the one or more processors are configured to:

transmit a plurality of first positioning reference signal (PRS) based on a plurality of first transmission (Tx) beams;
receive first information regarding at least one of one or more first measurements related to the plurality of first PRSs or one or more first PRS resource identifiers (IDs) related to the plurality of first PRSs;
transmit a plurality of second PRSs based on a plurality of second Tx beams related to the first information; and
receive second information regarding at least one of one or more second measurements related to the plurality of second PRSs or one or more second PRS resource IDs related to the plurality of second PRSs.

**14.** A device operating in a wireless communication system, comprising:

one or more processors; and
one or more memories operatively connected to the one or more processors and configured to store one or more instructions that cause the one or more processors to perform an operation based on the operation being executed,
wherein the operation includes:

receiving a plurality of first positioning reference signal (PRS) based on a plurality of first transmission (Tx) beams;
transmitting first information regarding at least one of one or more first measurements related to the plurality of first PRSs or one or more first PRS resource identifiers (IDs) related to the plurality of first PRSs;

receiving a plurality of second PRSs based on a plurality of second Tx beams related to the first information; and

transmitting second information regarding at least one of one or more second measurements related to the plurality of second PRSs or one or more second PRS resource IDs related to the plurality of second PRSs.

**15.** A non-transitory processor-readable medium storing one or more instructions that cause one or more processors to perform an operation, the operation comprising:

receiving a plurality of first positioning reference signal (PRS) based on a plurality of first transmission (Tx) beams;
transmitting first information regarding at least one of one or more first measurements related to the plurality of first PRSs or one or more first PRS resource identifiers (IDs) related to the plurality of first PRSs;
receiving a plurality of second PRSs based on a plurality of second Tx beams related to the first information; and
transmitting second information regarding at least one of one or more second measurements related to the plurality of second PRSs or one or more second PRS resource IDs related to the plurality of second PRSs.

# FIG. 1

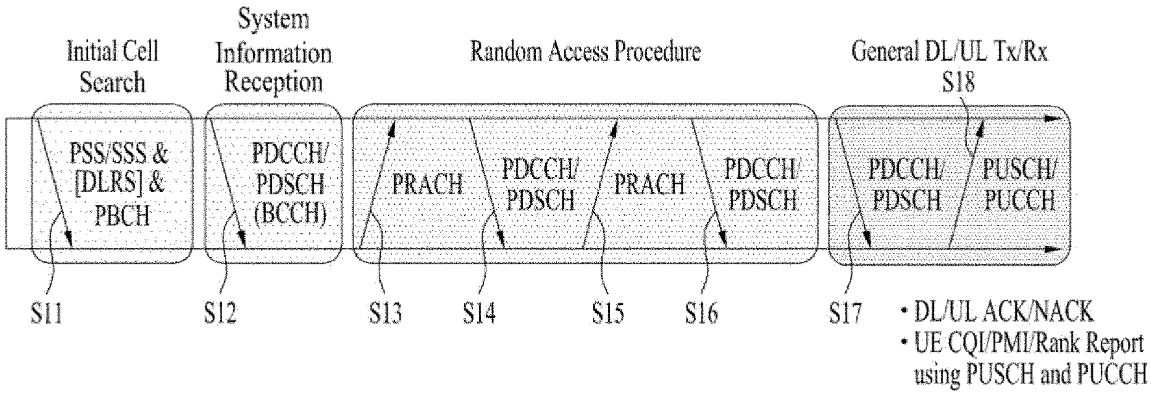
Initial Cell Search
System Information Reception
Random Access Procedure
General DL/UL Tx/Rx
S18
PSS/SSS & [DLRS] & PBCH
PDCCH/ PDSCH (BCCH)
PRACH
PDCCH/ PDSCH
PRACH
PDCCH/ PDSCH
PDCCH/ PDSCH
PUSCH/ PUCCH
S11
S12
S13
S14
S15
S16
S17
• DL/UL ACK/NACK
• UE CQI/PMI/Rank Report using PUSCH and PUCCH

# FIG. 2

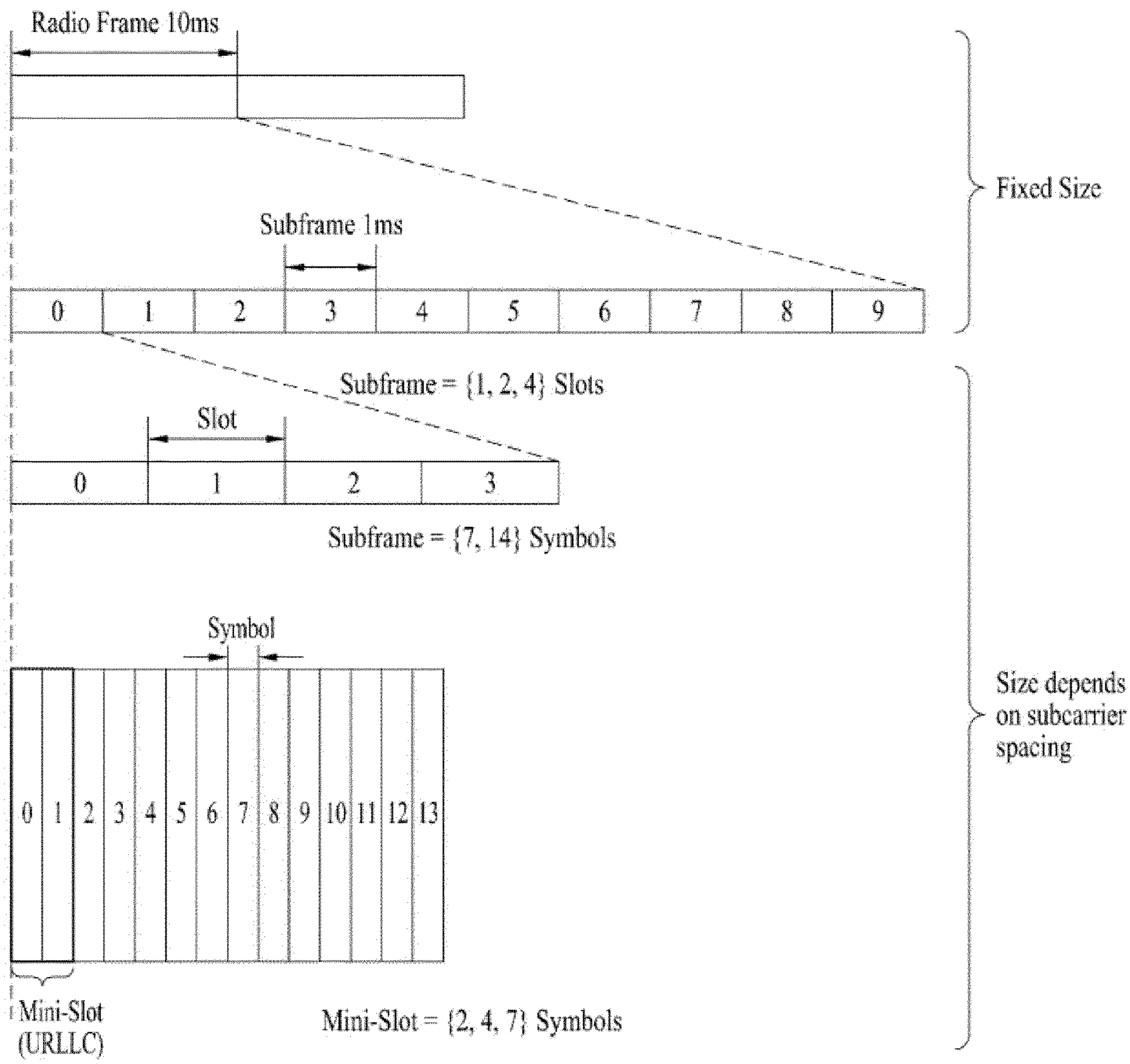
Radio Frame 10ms
Fixed Size
Subframe 1ms
0 1 2 3 4 5 6 7 8 9
Subframe = {1, 2, 4} Slots
Slot
0 1 2 3
Subframe = {7, 14} Symbols
Symbol
0 1 2 3 4 5 6 7 8 9 10 11 12 13
Size depends on subcarrier spacing
Mini-Slot (URLLC)
Mini-Slot = {2, 4, 7} Symbols

# FIG. 3

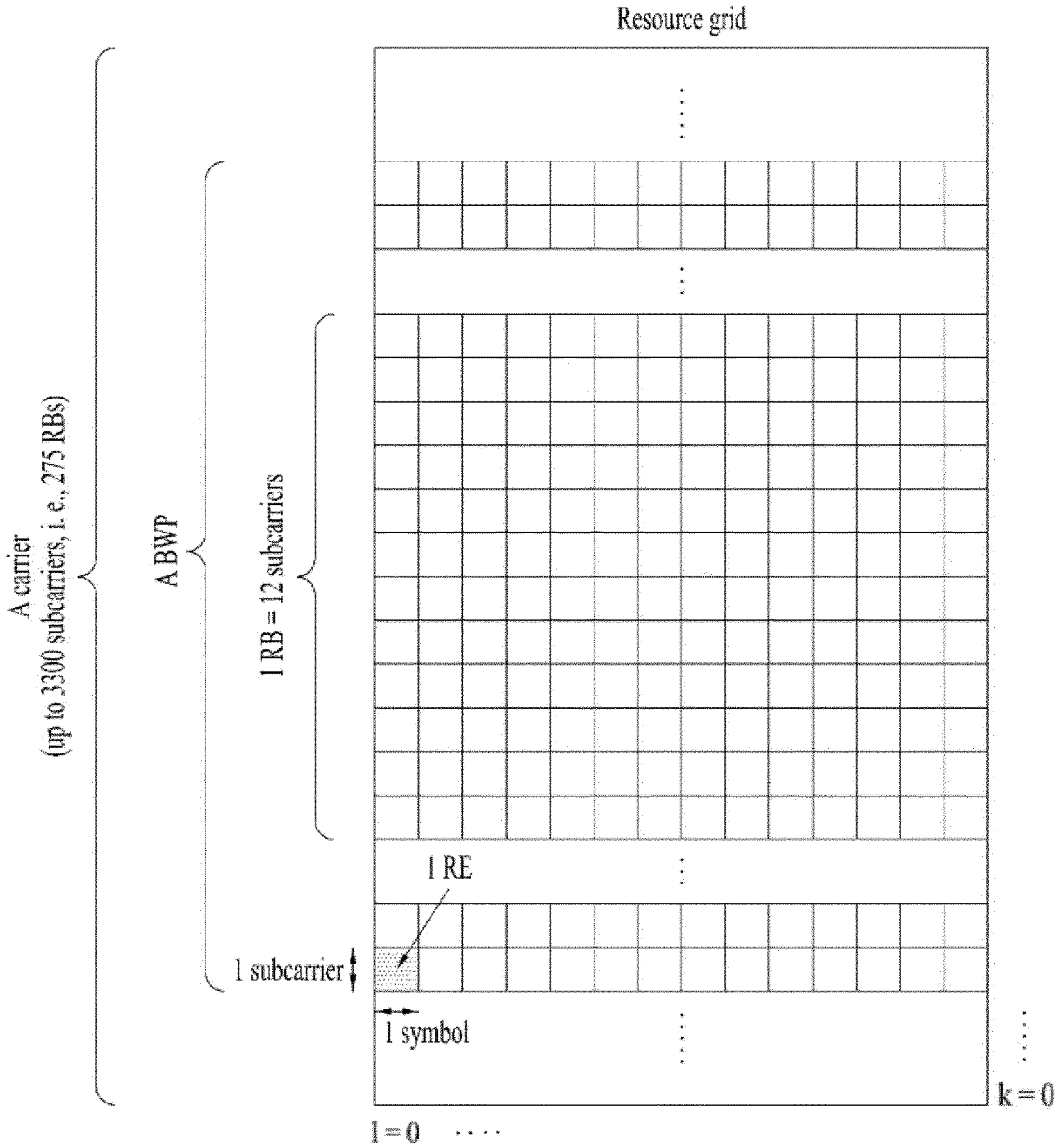
Resource grid
A carrier
(up to 3300 subcarriers, i. e., 275 RBs)
A BWP
1 RB = 12 subcarriers
1 RE
1 subcarrier
1 symbol
k = 0
l = 0

# FIG. 4

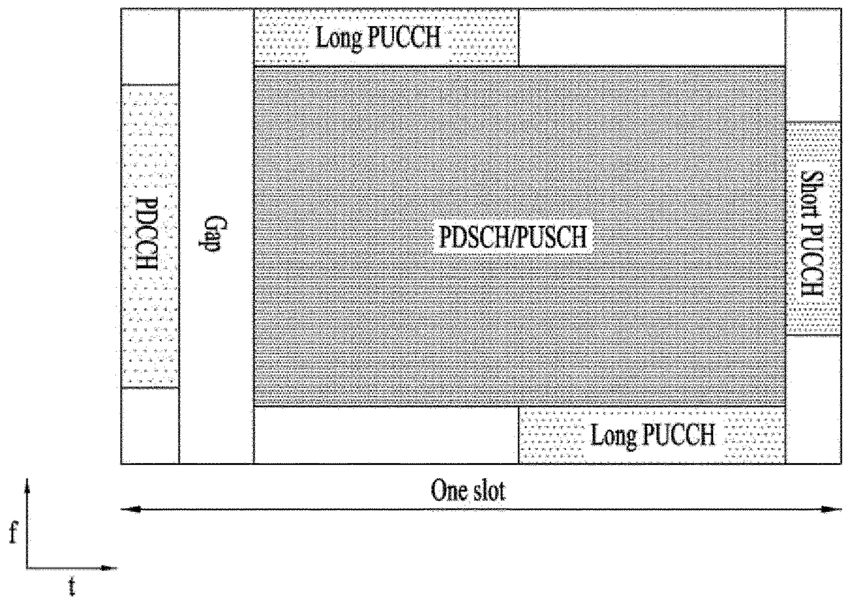
Long PUCCH
PDCCH
Gap
PDSCH/PUSCH
Short PUCCH
Long PUCCH
One slot
f
t

# FIG. 5

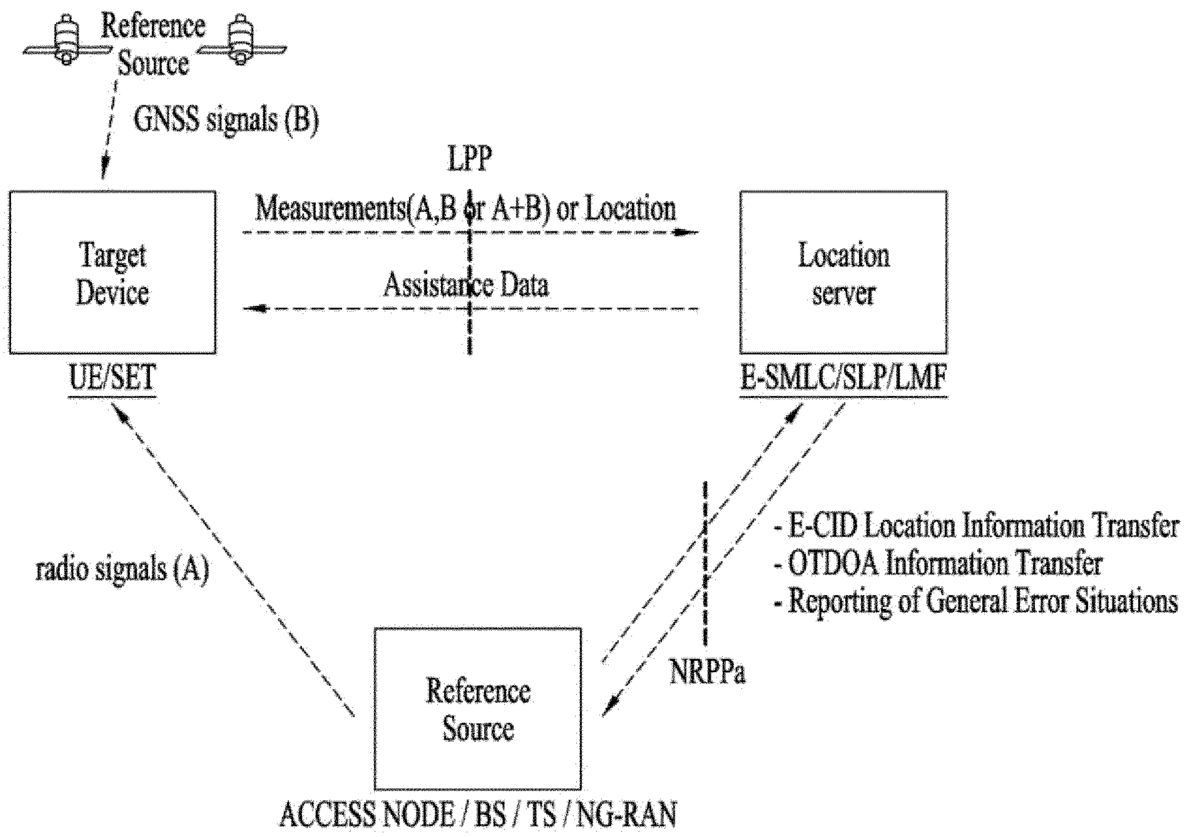
Reference Source
GNSS signals (B)
LPP
Measurements(A,B or A+B) or Location
Assistance Data
Target Device
UE/SET
Location server
E-SMLC/SLP/LMF
radio signals (A)
- E-CID Location Information Transfer
- OTDOA Information Transfer
- Reporting of General Error Situations
NRPPa
Reference Source
ACCESS NODE / BS / TS / NG-RAN

FIG. 6

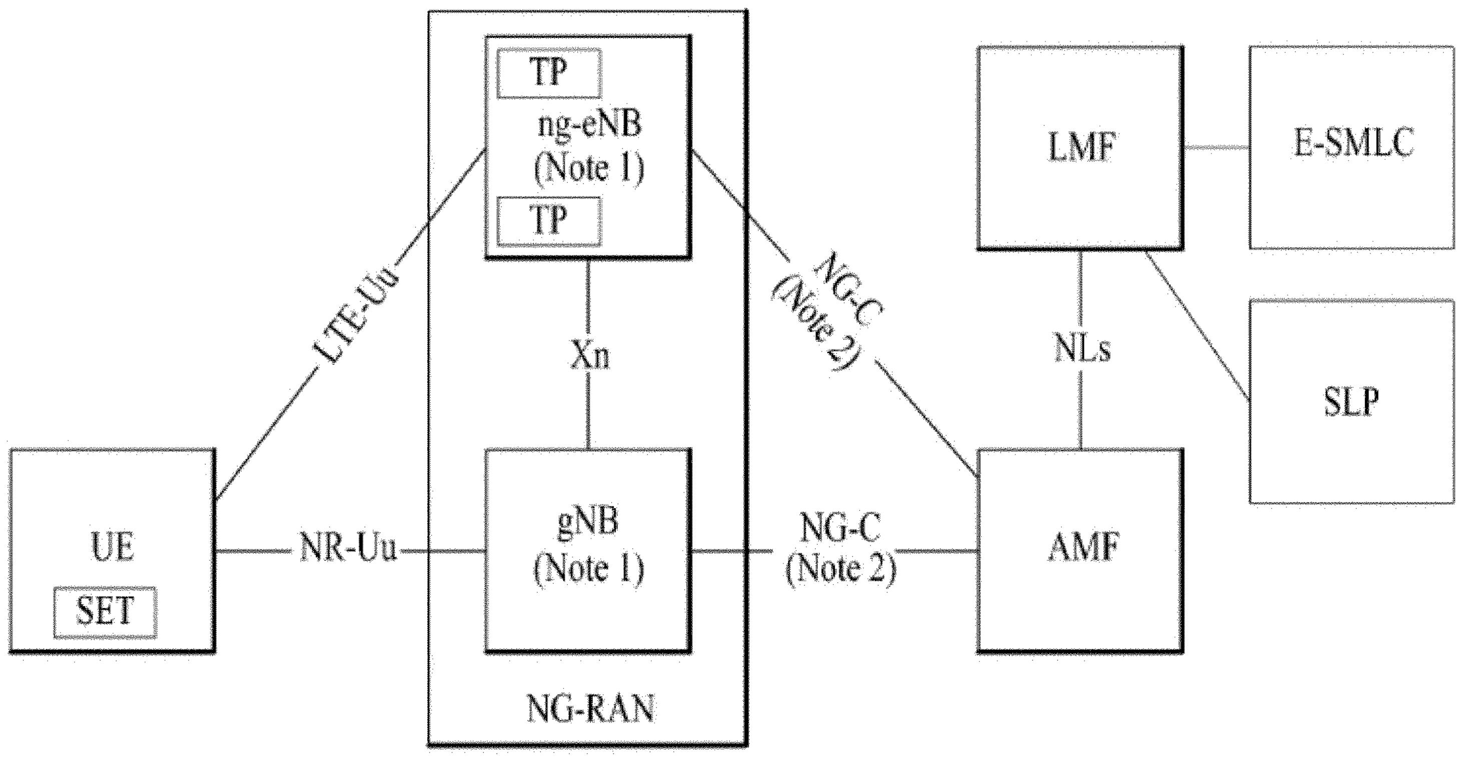
UE
SET
LTE-Uu
NR-Uu
TP
ng-eNB
(Note 1)
TP
Xn
gNB
(Note 1)
NG-RAN
NG-C
(Note 2)
NG-C
(Note 2)
LMF
NLs
AMF
E-SMLC
SLP

FIG. 7

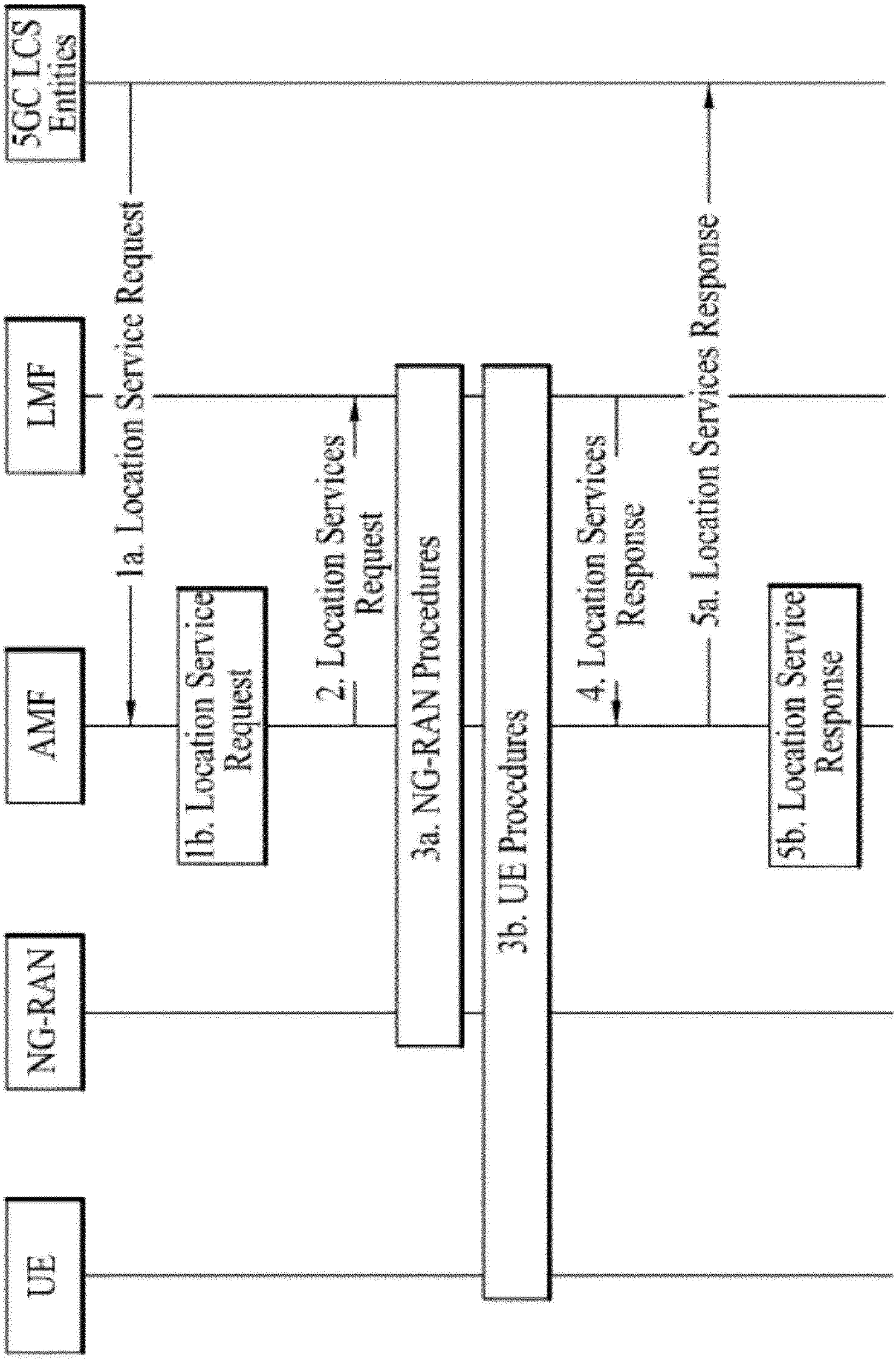
UE
NG-RAN
AMF
LMF
5GC LCS Entities
1a. Location Service Request
1b. Location Service Request
2. Location Services Request
3a. NG-RAN Procedures
3b. UE Procedures
4. Location Services Response
5a. Location Services Response
5b. Location Service Response

FIG. 8

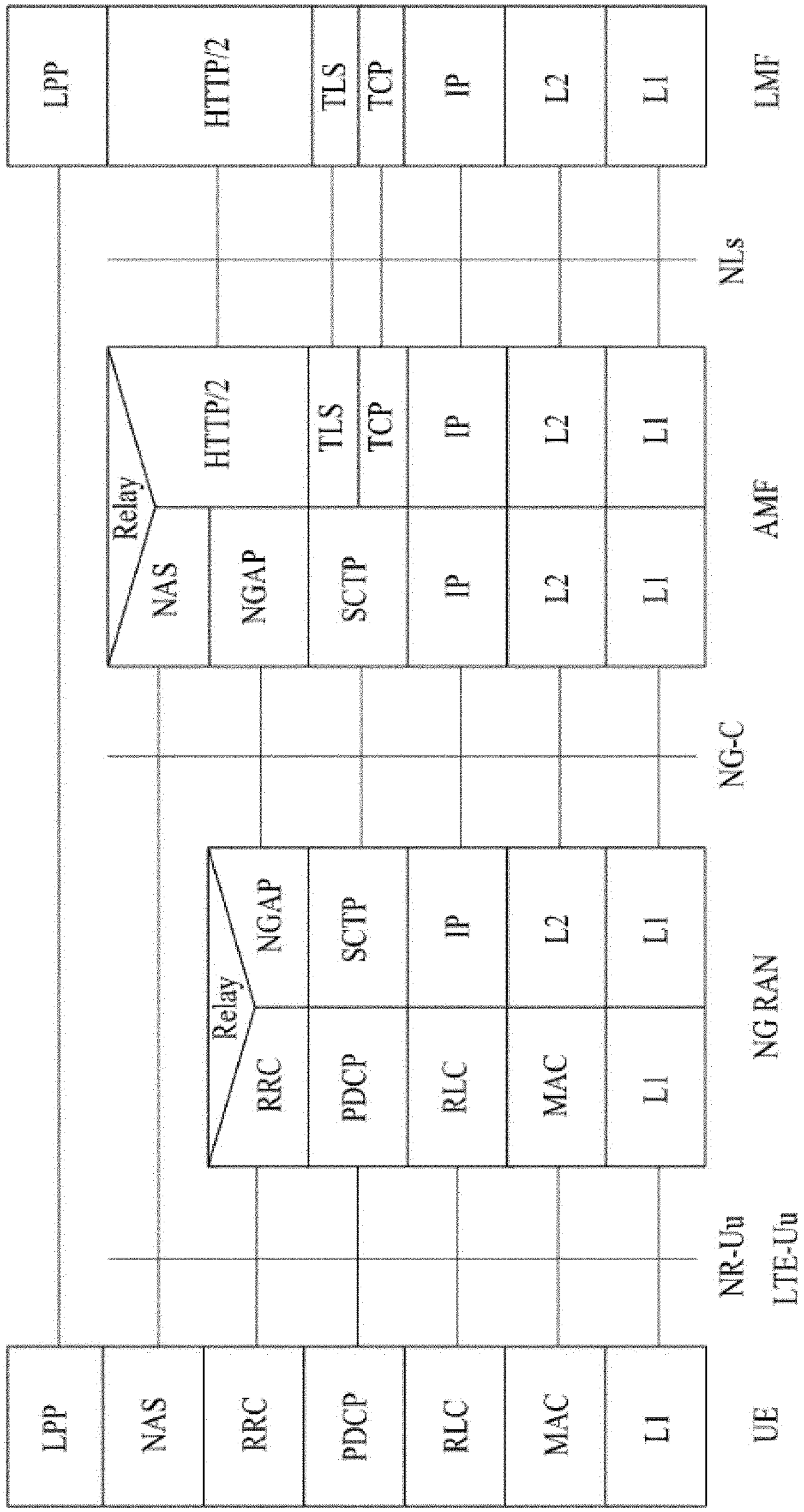
LPP
HTTP/2
TLS
TCP
IP
L2
L1
LMF
NLs
Relay
NAS
NGAP
SCTP
IP
L2
L1
AMF
NG-C
Relay
RRC
PDCP
RLC
MAC
L1
NG RAN
NR-Uu
LTE-Uu
LPP
NAS
RRC
PDCP
RLC
MAC
L1
UE

FIG. 9

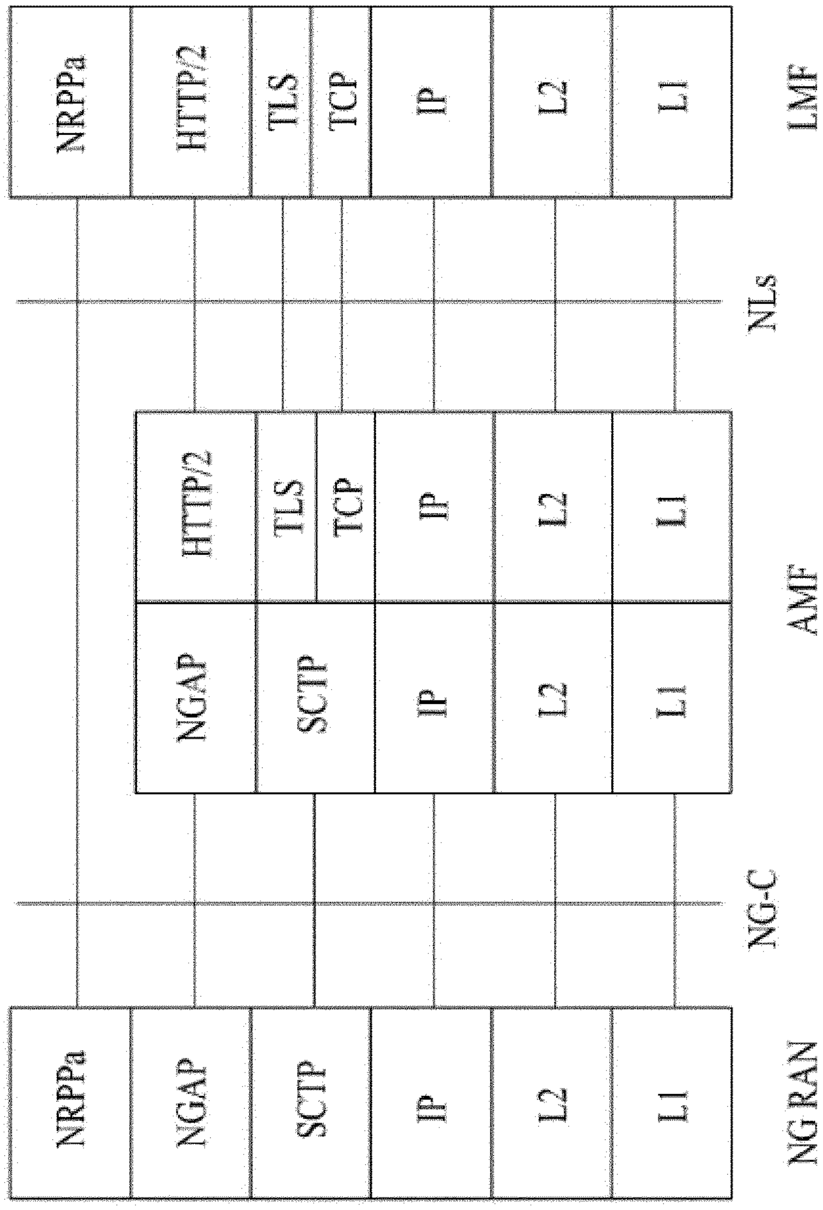
NRPPa
NGAP
SCTP
IP
L2
L1
NG RAN
NG-C
NGAP
SCTP
IP
L2
L1
HTTP/2
TLS
TCP
IP
L2
L1
AMF
NLs
NRPPa
HTTP/2
TLS
TCP
IP
L2
L1
LMF

**FIG. 10**

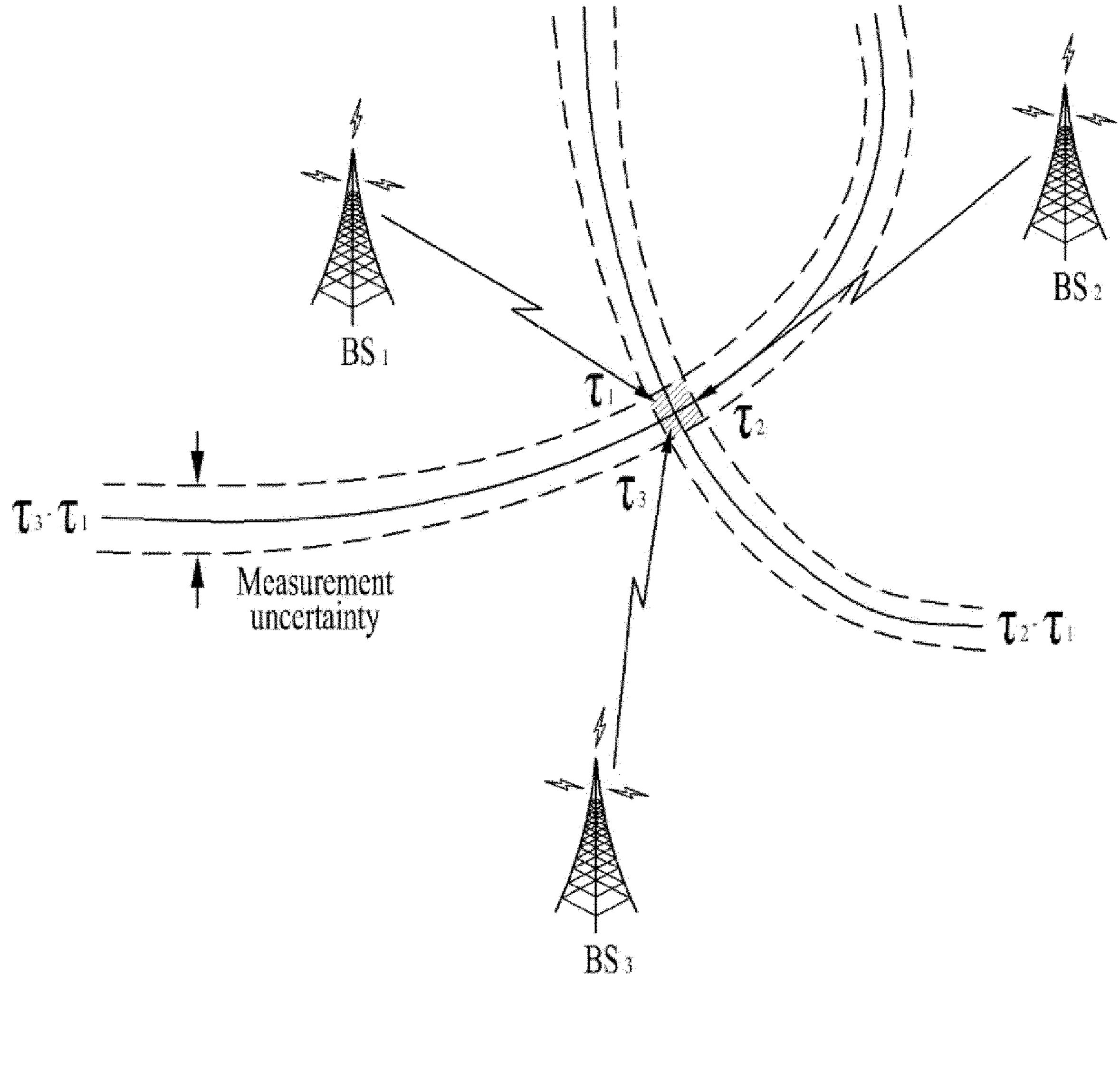

**FIG. 11**

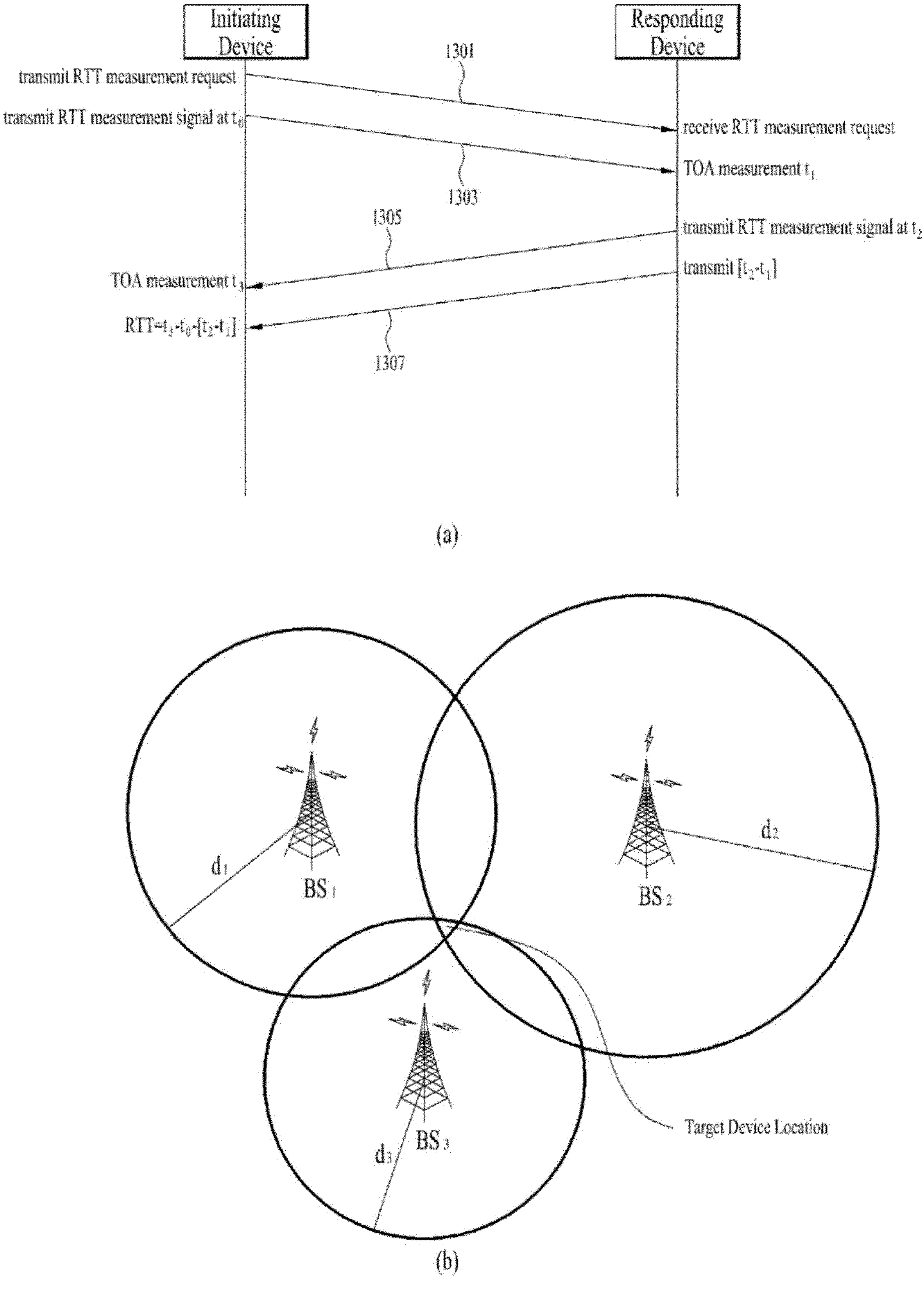

Initiating Device
Responding Device
1301
transmit RTT measurement request
receive RTT measurement request
transmit RTT measurement signal at $t_0$
TOA measurement $t_1$
1303
1305
transmit RTT measurement signal at $t_2$
transmit $[t_2-t_1]$
TOA measurement $t_3$
RTT=$t_3-t_0-[t_2-t_1]$
1307
(a)
$d_1$
$BS_1$
$d_2$
$BS_2$
$d_3$
$BS_3$
Target Device Location
(b)

# FIG. 12

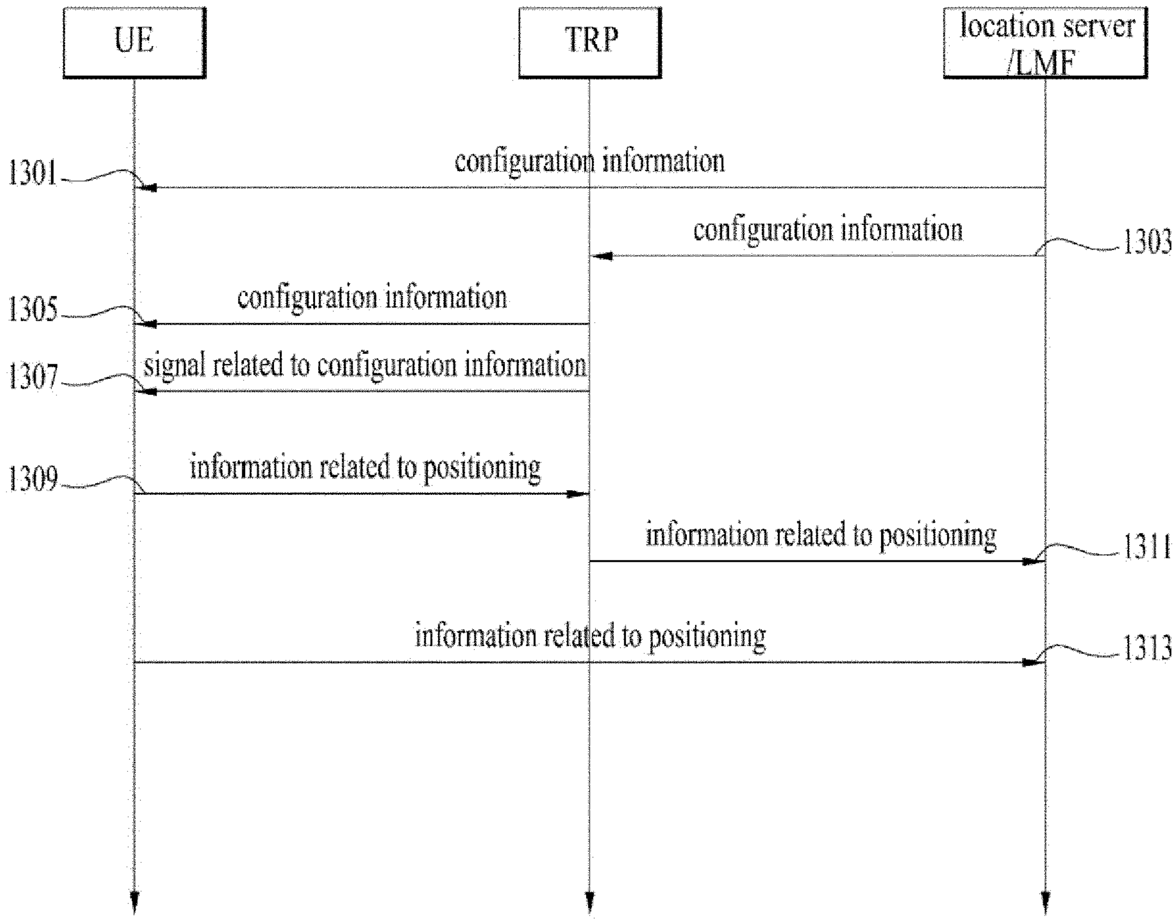
UE
TRP
location server /LMF
1301
configuration information
configuration information
1303
1305
configuration information
1307
signal related to configuration information
1309
information related to positioning
information related to positioning
1311
information related to positioning
1313

# FIG. 13

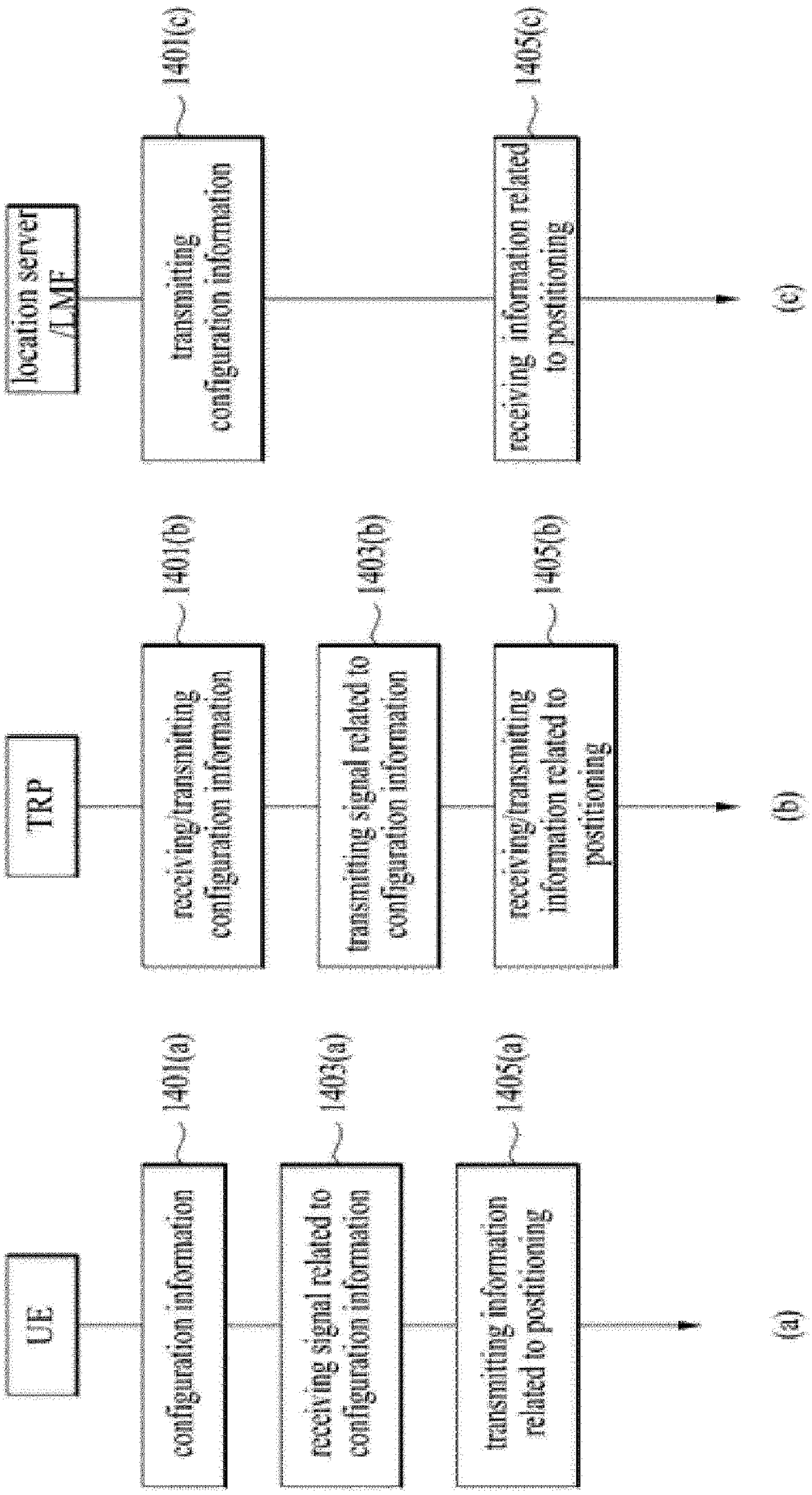
UE
configuration information
1401(a)
receiving signal related to configuration information
1403(a)
transmitting information related to positioning
1405(a)
(a)
TRP
receiving/transmitting configuration information
1401(b)
transmitting signal related to configuration information
1403(b)
receiving/transmitting information related to positioning
1405(b)
(b)
location server /LMF
transmitting configuration information
1401(c)
receiving information related to positioning
1405(c)
(c)

**FIG. 14**

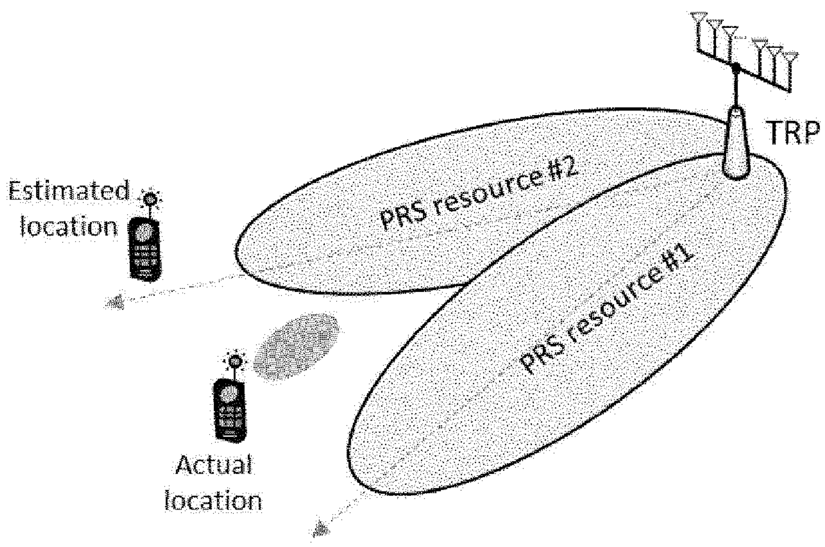
TRP
PRS resource #2
PRS resource #1
Estimated location
Actual location

FIG. 15

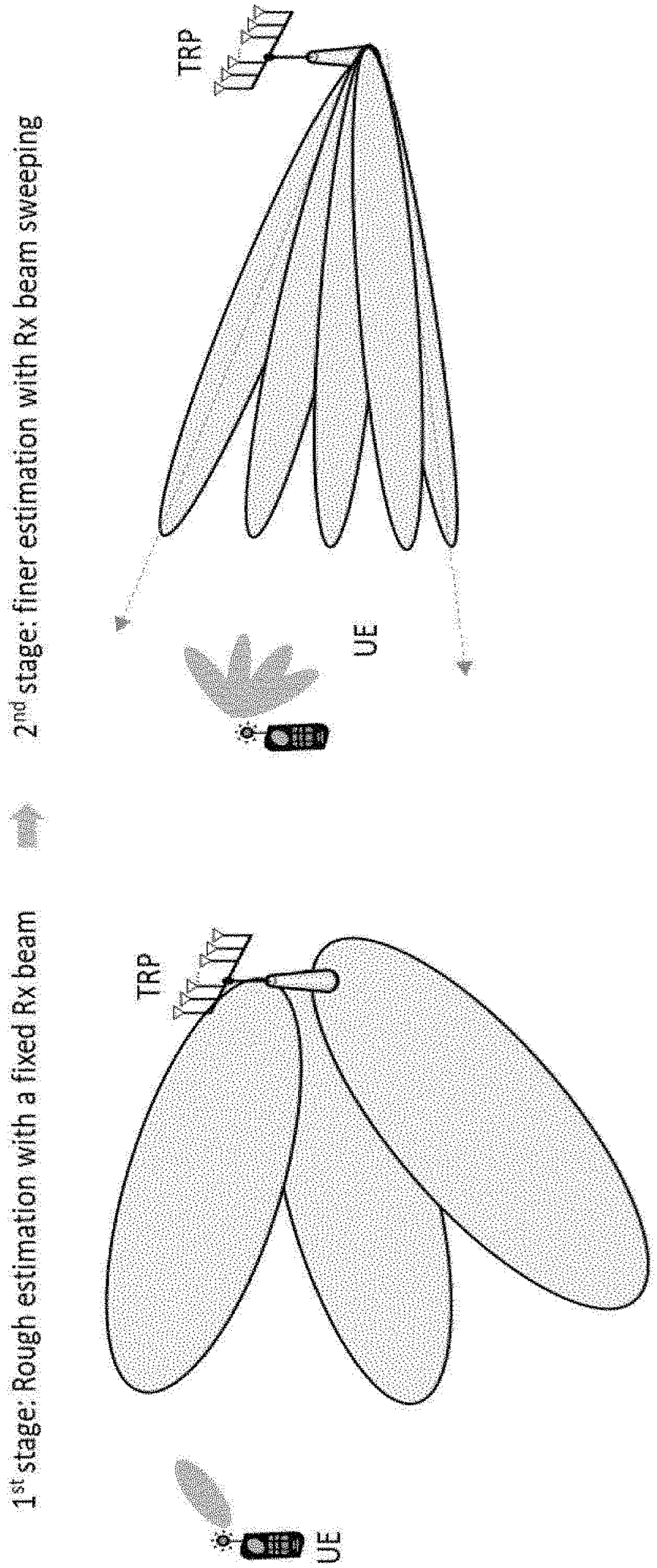
1st stage: Rough estimation with a fixed Rx beam
TRP
UE
2nd stage: finer estimation with Rx beam sweeping
TRP
UE

FIG. 16

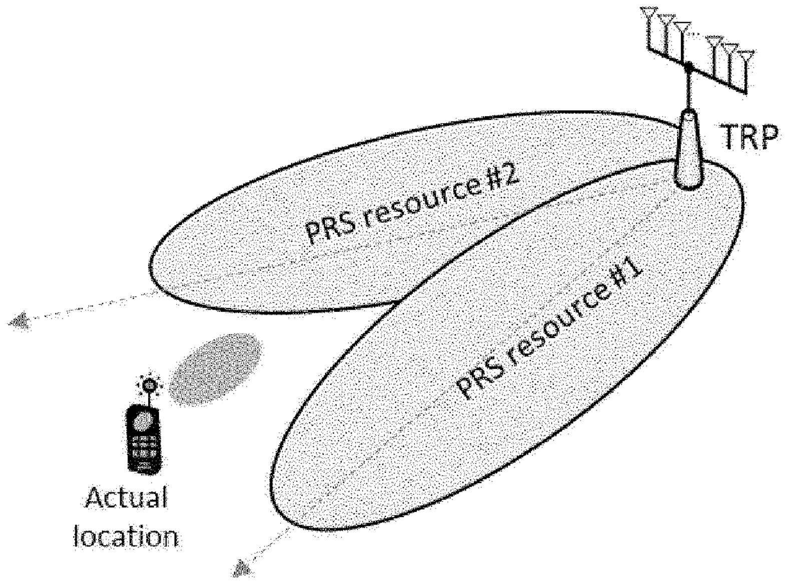

# FIG. 17

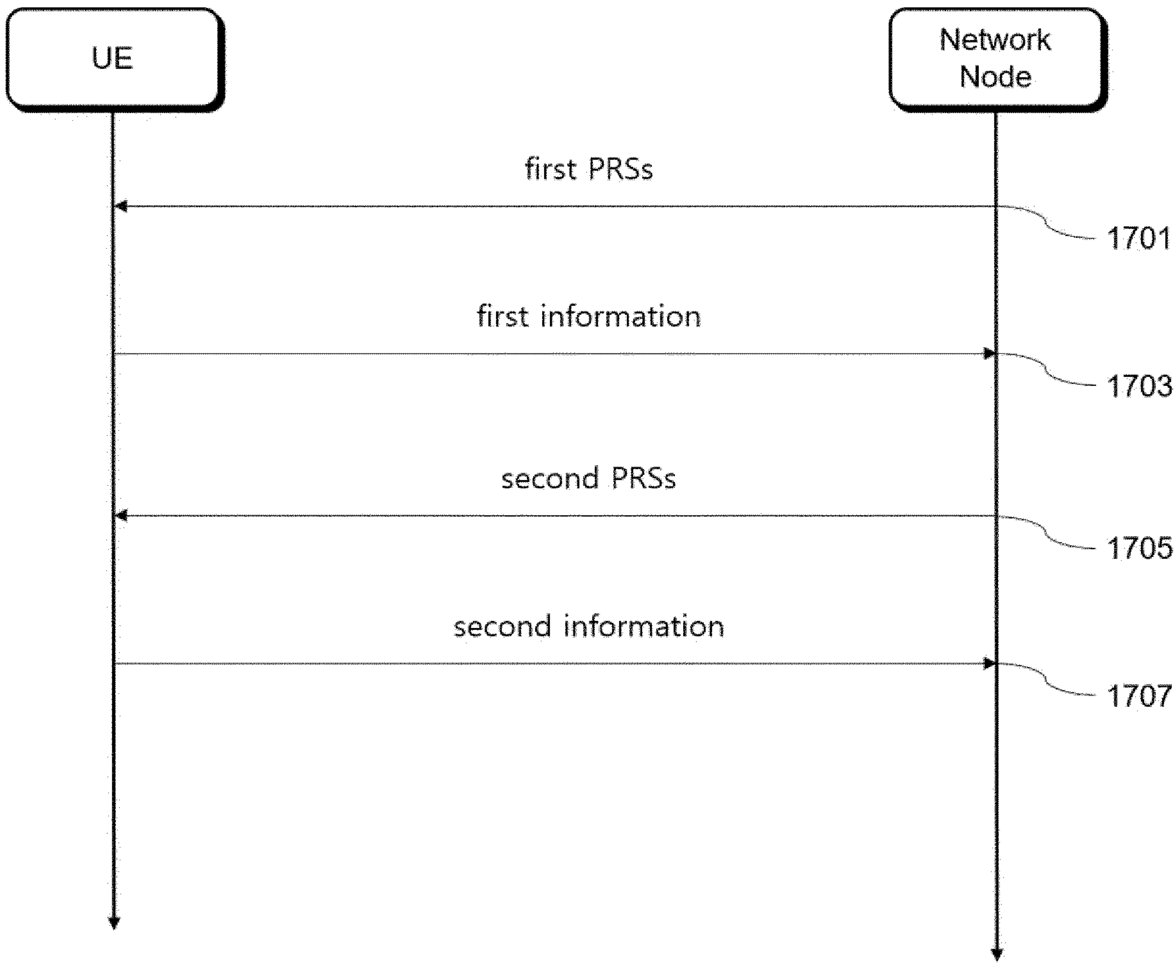
UE
Network Node
first PRSs
1701
first information
1703
second PRSs
1705
second information
1707

# FIG. 18

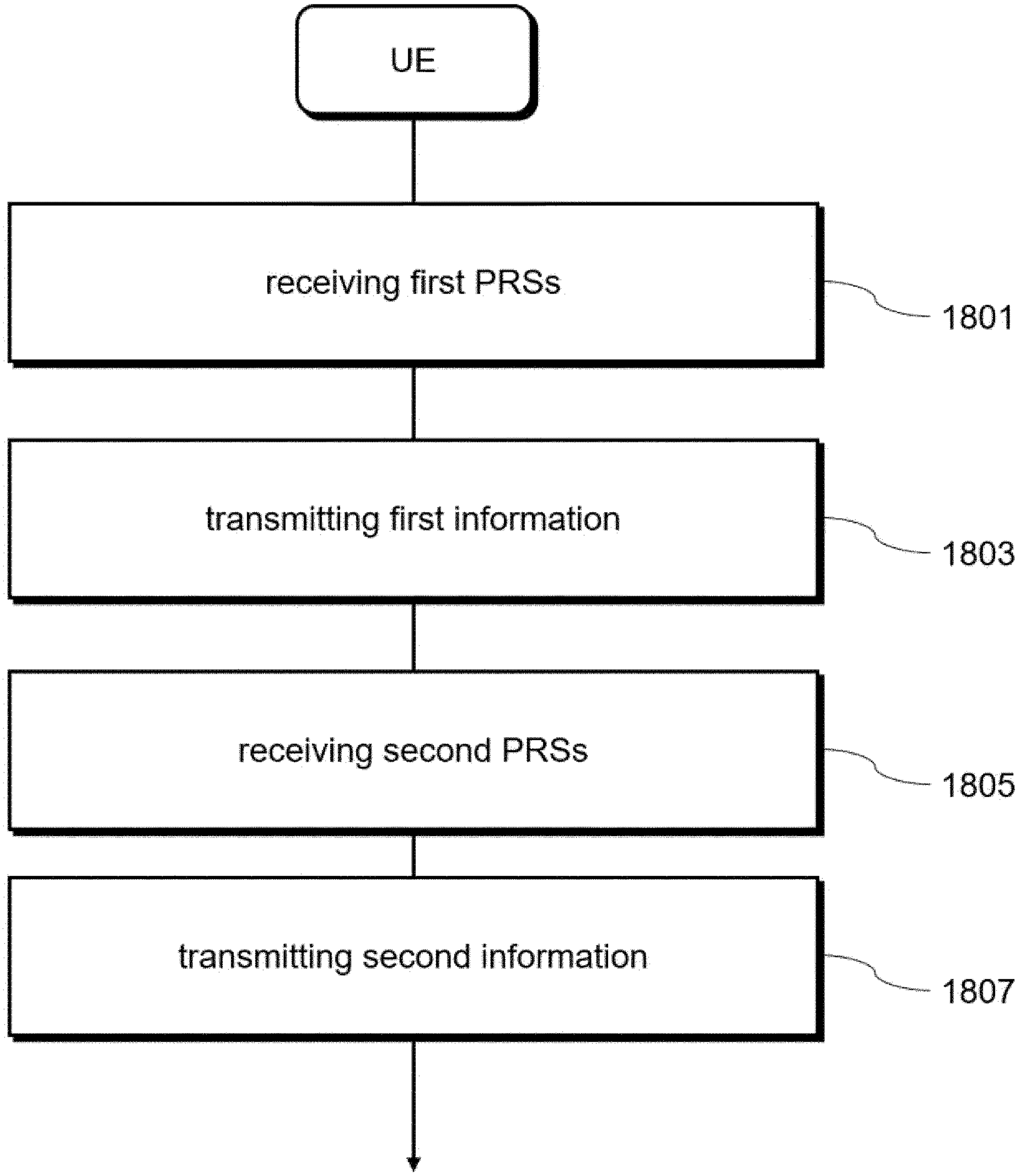
UE
receiving first PRSs
1801
transmitting first information
1803
receiving second PRSs
1805
transmitting second information
1807

FIG. 19

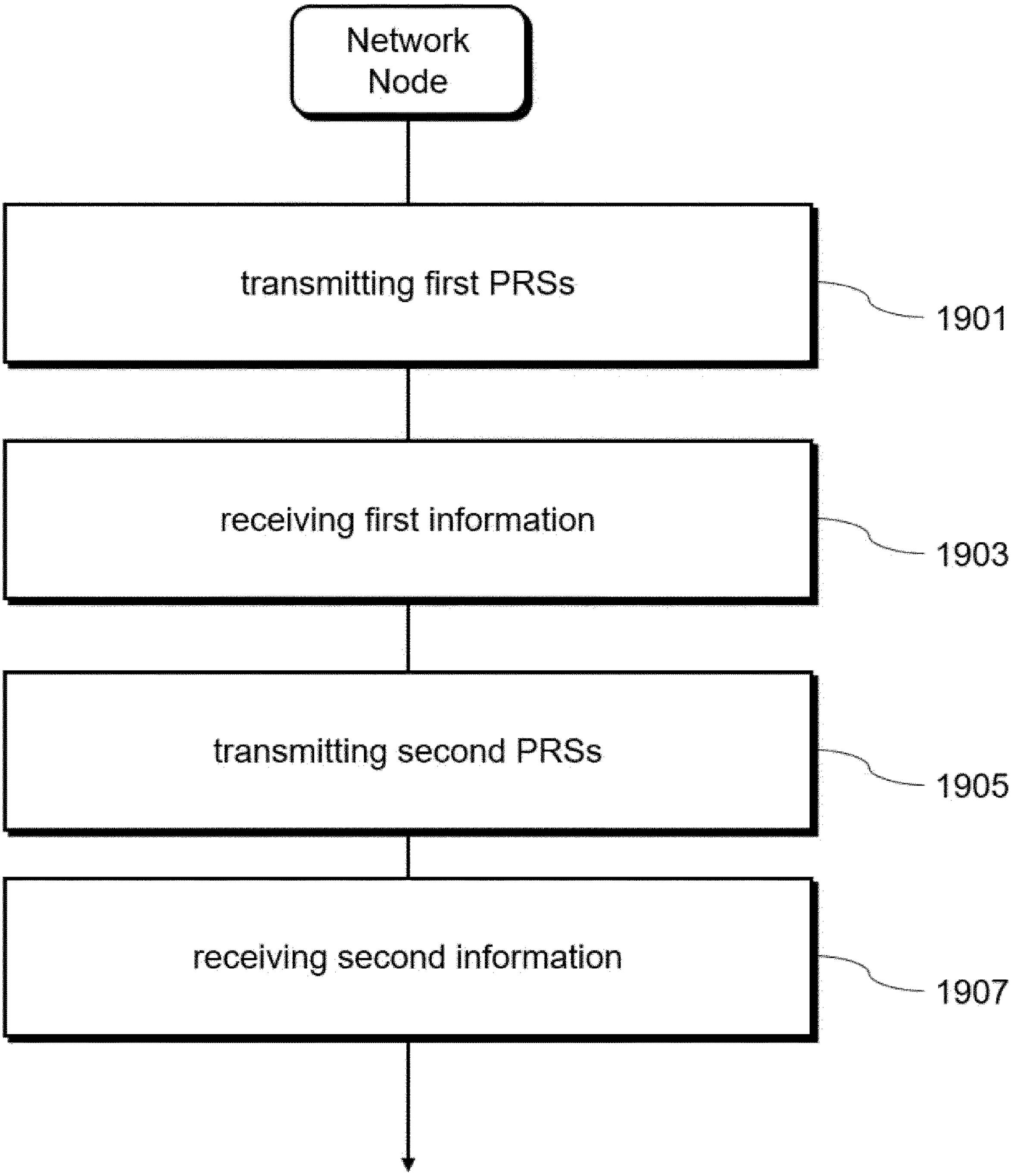
Network
Node
transmitting first PRSs
1901
receiving first information
1903
transmitting second PRSs
1905
receiving second information
1907

# FIG. 20

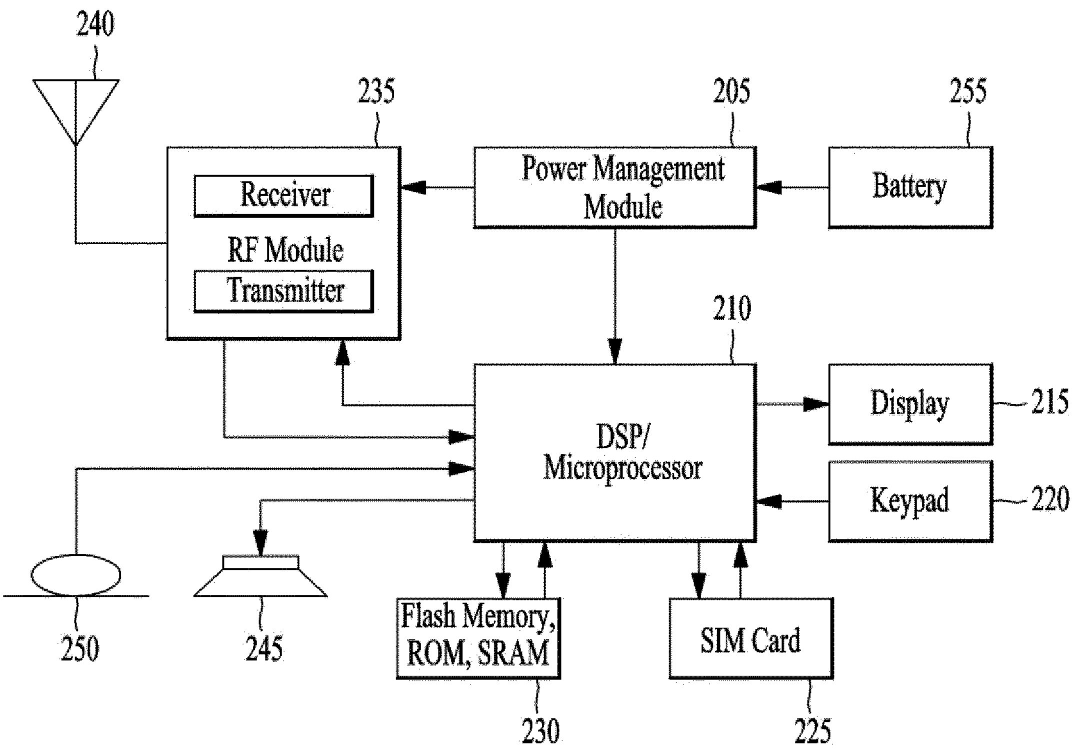
240
235
205
255
Receiver
RF Module
Transmitter
Power Management Module
Battery
210
DSP/ Microprocessor
Display
215
Keypad
220
Flash Memory, ROM, SRAM
SIM Card
250
245
230
225

# FIG. 21

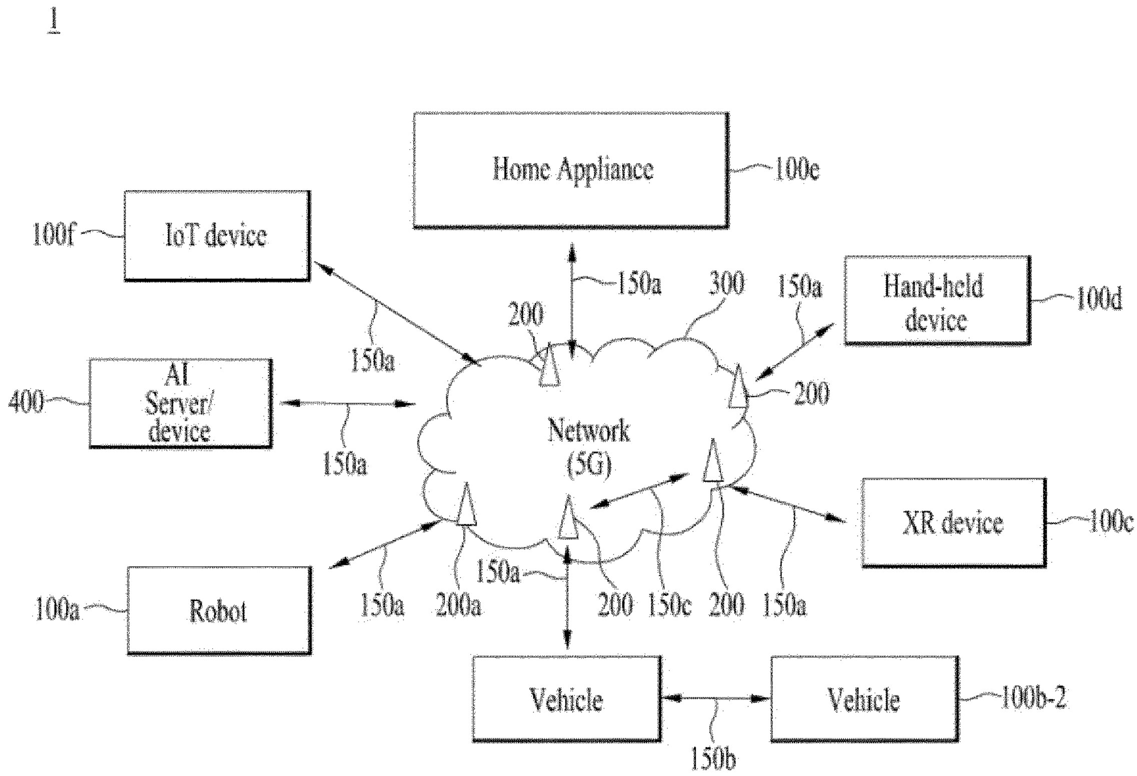
1
Home Appliance
100e
IoT device
100f
150a
300
150a
Hand-held device
100d
200
AI Server/ device
400
150a
200
Network (5G)
XR device
100c
Robot
100a
150a
200a
150a
200
150c
200
150a
Vehicle
Vehicle
100b-2
150b

# FIG. 22

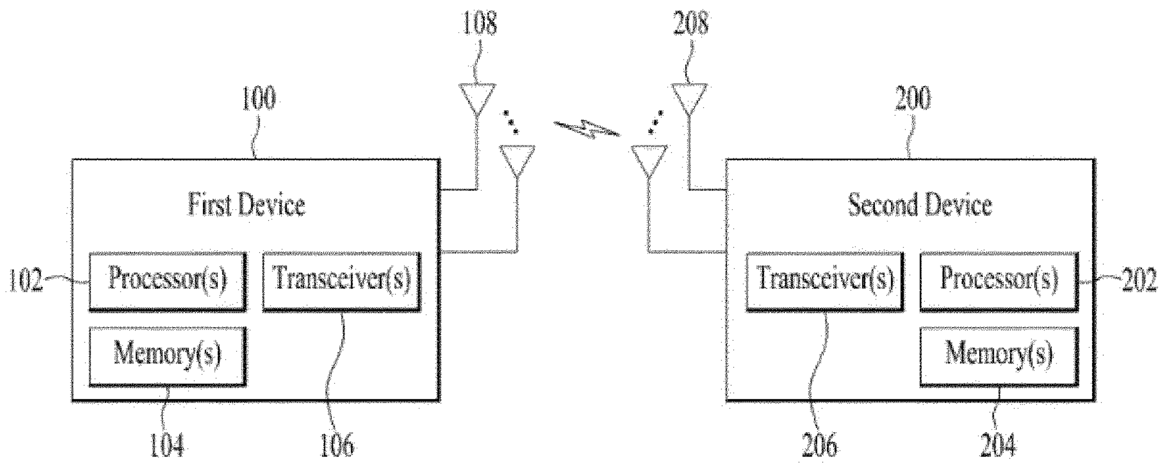
108
208
100
200
First Device
Second Device
102
Processor(s)
Transceiver(s)
Transceiver(s)
Processor(s)
202
Memory(s)
Memory(s)
104
106
206
204

FIG. 23

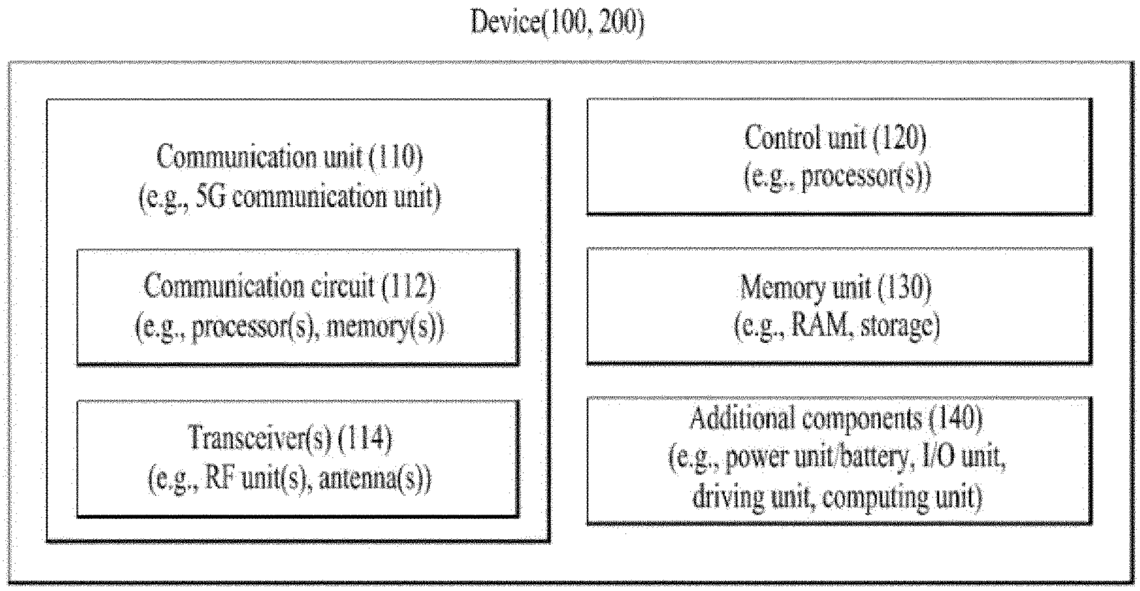
Device(100, 200)
Communication unit (110)
(e.g., 5G communication unit)
Communication circuit (112)
(e.g., processor(s), memory(s))
Transceiver(s) (114)
(e.g., RF unit(s), antenna(s))
Control unit (120)
(e.g., processor(s))
Memory unit (130)
(e.g., RAM, storage)
Additional components (140)
(e.g., power unit/battery, I/O unit,
driving unit, computing unit)

FIG. 24

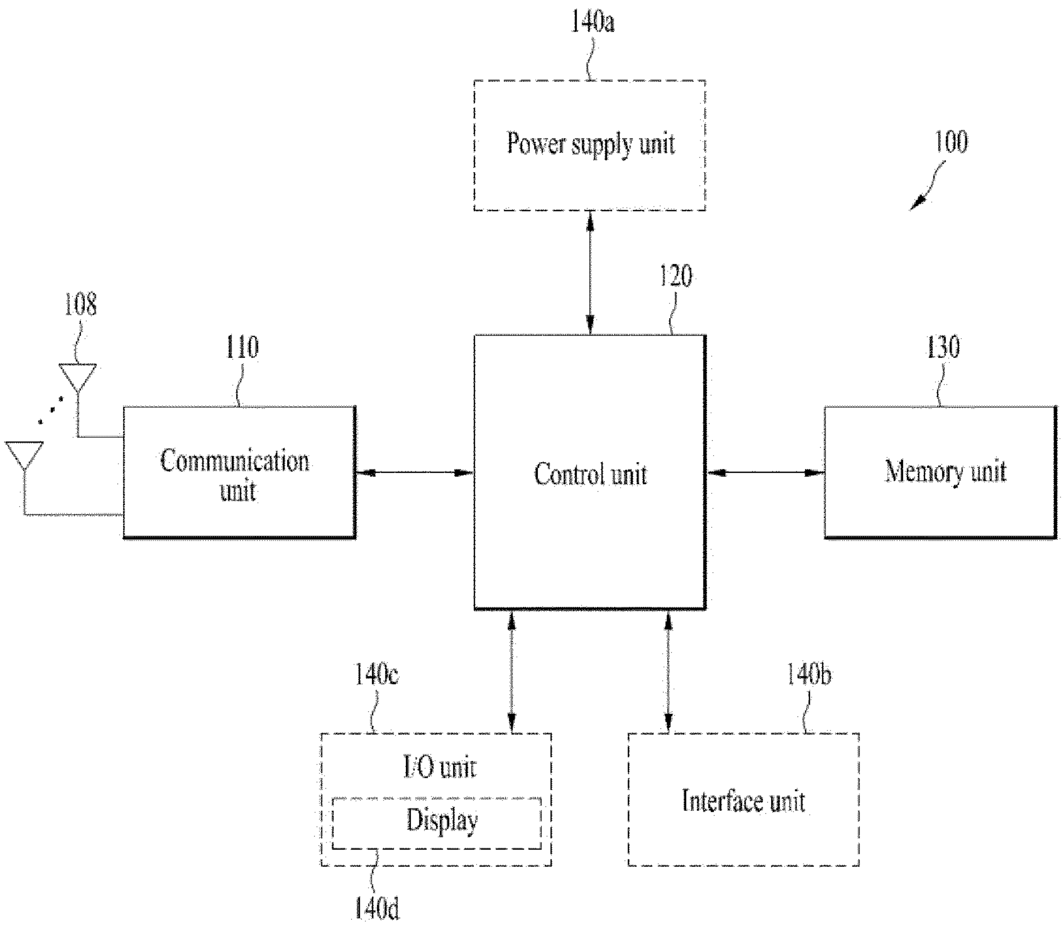
140a
Power supply unit
100
120
108
110
Communication unit
Control unit
130
Memory unit
140c
140b
I/O unit
Display
Interface unit
140d

# FIG. 25

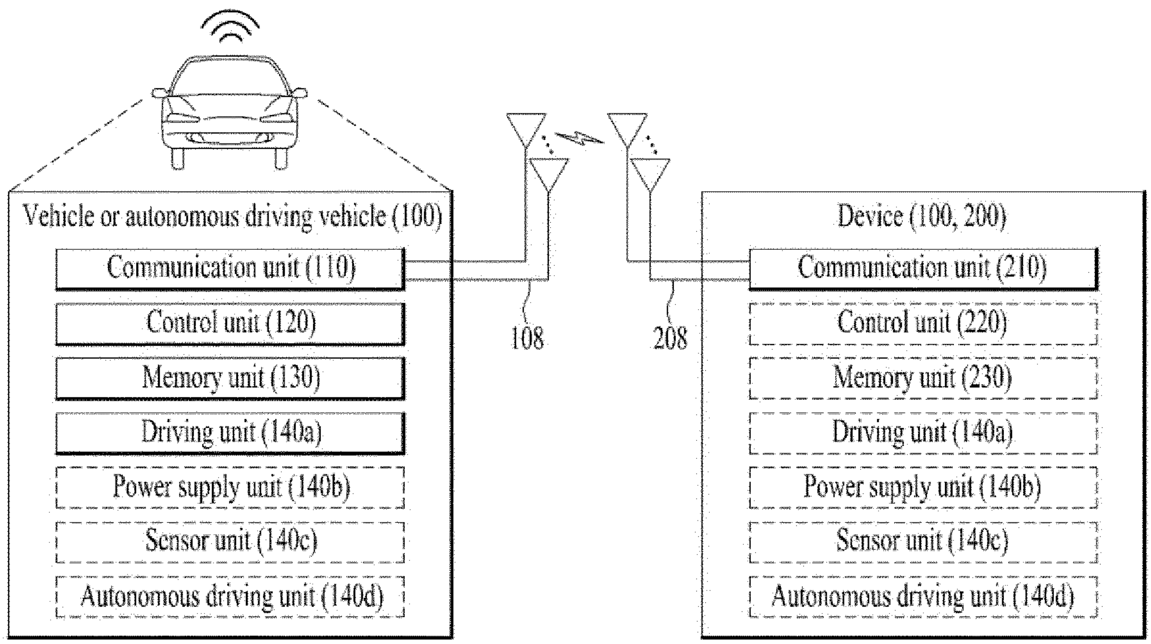
Vehicle or autonomous driving vehicle (100)
Communication unit (110)
Control unit (120)
Memory unit (130)
Driving unit (140a)
Power supply unit (140b)
Sensor unit (140c)
Autonomous driving unit (140d)
108
208
Device (100, 200)
Communication unit (210)
Control unit (220)
Memory unit (230)
Driving unit (140a)
Power supply unit (140b)
Sensor unit (140c)
Autonomous driving unit (140d)

**INTERNATIONAL SEARCH REPORT**

International application No.
**PCT/KR2022/000925**

**A. CLASSIFICATION OF SUBJECT MATTER**

**H04W 64/00**(2009.01)i; **H04W 24/10**(2009.01)i; **H04L 5/00**(2006.01)i; **G01S 1/04**(2006.01)i

According to International Patent Classification (IPC) or to both national classification and IPC

**B. FIELDS SEARCHED**

Minimum documentation searched (classification system followed by classification symbols)

H04W 64/00(2009.01); G01S 1/04(2006.01); G01S 1/20(2006.01); H04W 24/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PRS, 빔(beam), 측정(measurement), 보고(report)

**C. DOCUMENTS CONSIDERED TO BE RELEVANT**

| Category* | Citation of document, with indication, where appropriate, of the relevant passages | Relevant to claim No. |
|---|---|---|
| Y<br>A | WO 2020-026211 A1 (TELEFONAKTIEBOLAGET LM ERICSSON (PUBL)) 06 February 2020 (2020-02-06)<br>See page 8, line 1 - page 11, line 13; and claims 1-30. | 1-3,6-9,11-15<br>4,5,10 |
| Y | XIAOMI. Potential positioning enhancements. R1-2008083, 3GPP TSG RAN WG1 #103-e. 01 November 2020.<br>See sections 2.1-2.3. | 1-3,6-9,11-15 |
| Y | SONY. Considerations on potential positioning enhancements. R1-2008365, 3GPP TSG RAN WG1 #103-e. 01 November 2020.<br>See sections 2.1.1-2.2.1. | 6 |
| A | CMCC. Remaining issues on DL PRS. R1-2007999, 3GPP TSG RAN WG1 #103-e. 01 November 2020.<br>See section 2. | 1-15 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 May 2022** | **13 May 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.
**PCT/KR2022/000925**

| C. DOCUMENTS CONSIDERED TO BE RELEVANT | | |
|---|---|---|
| Category* | Citation of document, with indication, where appropriate, of the relevant passages | Relevant to claim No. |
| A | CN 110958630 A (TELECOMMUNICATION SCIENCE AND TECHNOLOGY RESEARCH INSTITUTE CO., LTD.) 03 April 2020 (2020-04-03)<br>See paragraphs [0005]-[0092]; and claims 1-33. | 1-15 |

Form PCT/ISA/210 (second sheet) (July 2019)

**INTERNATIONAL SEARCH REPORT**
**Information on patent family members**

International application No.
**PCT/KR2022/000925**

| Patent document cited in search report | Publication date (day/month/year) | Patent family member(s) | Publication date (day/month/year) |
|---|---|---|---|
| WO 2020-026211 A1 | 06 February 2020 | CN 112771394 A | 07 May 2021 |
| | | EP 3830599 A1 | 09 June 2021 |
| | | JP 2021-533615 A | 02 December 2021 |
| | | KR 10-2021-0039435 A | 09 April 2021 |
| | | US 2021-0297216 A1 | 23 September 2021 |
| CN 110958630 A | 03 April 2020 | CN 110958630 B | 22 January 2021 |
| | | EP 3860192 A1 | 04 August 2021 |
| | | JP 2022-501923 A | 06 January 2022 |
| | | KR 10-2021-0066869 A | 07 June 2021 |
| | | TW 202014020 A | 01 April 2020 |
| | | TW I720630 B | 01 March 2021 |
| | | US 11201715 B2 | 14 December 2021 |
| | | US 2021-0328747 A1 | 21 October 2021 |
| | | WO 2020-063286 A1 | 02 April 2020 |

Form PCT/ISA/210 (patent family annex) (July 2019)